# EUROPEAN PATENT SPECIFICATION

(11) **EP 2 410 821 B1**
(45) Date of publication and mention of the grant of the patent: **08.01.2014**
(21) Application number: 11173309.3
(22) Date of filing: 08.07.2011
(51) Int. Cl.: H05B 33/08, H05B 37/02

(54) **Lighting device of semiconductor light-emitting element and illumination fixture using the same**
Lichtvorrichtung mit Lichtemitteirenden Halbleiterbauelement und Beleuchtungseinrichtung damit
Dispositif d'éclarirage d'un élément électroluminescent à semi-conducteur et accessoire d'éclairage l'utilisant

(30) Priority: 20.07.2010 JP 2010163428; 20.08.2010 JP 2010184909; 13.09.2010 JP 2010204340; 16.09.2010 JP 2010207583
(43) Date of publication of application: 25.01.2012
(73) Proprietor: Panasonic Corporation, Osaka 571-8501 (JP)
(72) Inventor: Hiramatu, Akinori, Nara, Nara (JP); Mizukawa, Hiromitsu, Suita, Osaka (JP)
(74) Representative: Rüger, Barthelt & Abel

(56) References cited:
- WO-A1-2004/057921
- WO-A1-2010/045666
- US-A1- 2007 013 323

## Description

### [Field of the Invention]

The present invention relates to a lighting device of a semiconductor light-emitting element and to an illumination fixture, both of which light and dim a semiconductor light-emitting element such as a light emitting diode (LED).

### [Background Art]

In Patent literature 1 (JPA 2005-294063), an LED lighting device shown in Fig. 7 is disclosed. The LED lighting device includes: a switching element Q1 which is connected in series to a direct-current power source 2 and which is controlled to be turned on and off by a high-frequency wave; an inductance element L1 which is connected in series to the switching element Q1 and to which an electric current flows from the direct-current power source 2 when the switching element Q1 is turned on; a regeneration diode D1 for emitting energy, the energy being stored in the inductance element L1 when the switching element Q1 is turned on, to an LED 4 when the switching element is turned off; a current detection resistance R1 for detecting an electric current flowing to the switching element Q1; and a control means adapted to turn off the switching element Q1 when s current value detected by the current detection resistance R1 reaches a predetermined value (an on-voltage of a transistor Tr1) and to turn on the switching element Q1 when the energy emission of the inductance element L1 is completed (when a diode D2 is turned off).

However, since the LED lighting device according to Patent literature 1 does not have a dimming function, the device could not be used as an LED dimming lighting device.

In Patent literature 2 (JPT 2003-522393), although a concept to dim an LED illumination module at 100Hz and 120Hz synchronized with a commercial power supply frequency (50/60Hz) in the PWM dimming is proposed, the concrete circuit means was not disclosed.

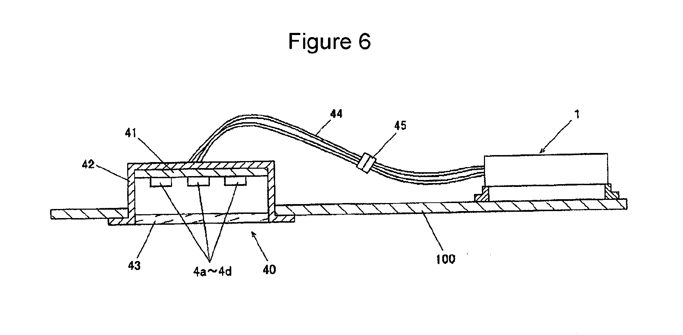

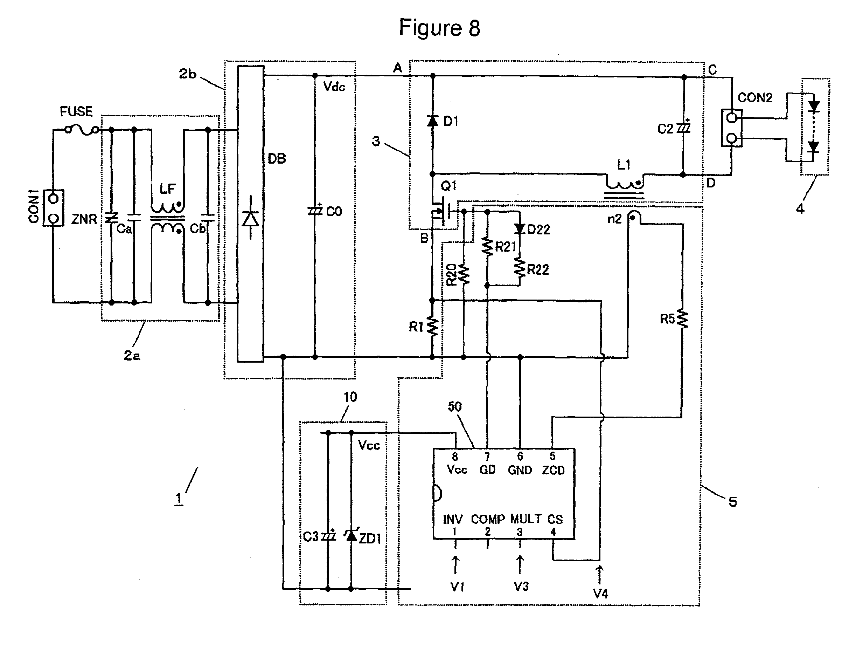

In Patent literature 3 (Japanese Patent Publication No. 4,474,562), an LED lighting device shown in Fig. 8 is disclosed. The LED lighting device is a lighting device for semiconductor light-emitting element, which controls a switching element Q1 to be turned off when an electric current flowing to an inductance element L1 reaches a predetermined value under a condition where the switching element Q1 is turned on and controls the switching element Q1 to be turned on when an electric current emitted from the inductance element L1 to a semiconductor light emitting element 4 via a regeneration diode D1 becomes zero under a condition where the switching element Q1 is turned off, wherein the lighting device controls, with improving an input power factor, an average value of the electric current flowing to the semiconductor light emitting element 4 to be a constant value based on a reference voltage Vref1. In addition, the semiconductor light emitting element 4 can be controlled to be dimmed by changing the reference voltage Vref1. The detailed configuration and operation will be described later in an explanation of Fig. 6, which can control an average current flowing to the semiconductor light emitting element 4 to be a constant value based on the reference voltage Vref1 even when a power source voltage and an ambient temperature have changed, can reduce the input current distortion, and additionally can be configured at a relatively-low cost.

In Patent literature 3, since the control circuit can be configured by using a commercially available IC for power factor improvement, the explanation says that the circuit can be realized at a relatively-low cost (see 0049). As is well known, among the commercially available ICs for power factor improvement, there is a low-cost IC integrating an error amplifier EA, a multiplier circuit 52, a comparator CP1, a flip-flop FF1, and a driving circuit 54 in one chip (see Fig. 2). However, in Patent literature 3, the semiconductor light emitting element 4 is controlled to be dimmed by setting the reference voltage Vref1 to be changeable (refer to 0051); however, the dimming control becomes hard in the case where the reference voltage Vref1 is incorporated in the IC.

In Patent literature 4 (JPA H10-133613), a use of the PWM dimming in a high luminance region and a use of combination of the amplitude dimming and the PWM dimming in a low luminance region are proposed. Additionally, in Patent literature 5 (JPA 2002-231470), a configuration for: converting an externally-inputted PWM signal into a second PWM signal having a different pulse width; interrupting, in accordance with the converted PWM signal, an electric current flowing to an LED; and adjusting, in accordance with a direct-current voltage obtained by smoothing the PWM signal, an amplitude of the electric current flowing to the LED is disclosed.

In techniques of Patent literatures 4 and 5, a conduction resistance of the transistor is variably controlled in order to adjust the amplitude of the electric current flowing to the LED, and thus a loss of the electric power becomes large. In order to reduce the power loss, it is effective to adjust the amplitude of the electric current flowing to the LED by using a switching power source circuit such as the chopper circuit. Particularly, it is known that the switching power source circuit operating in a critical mode where the switching element is controlled to be turned on after detecting a zero-cross point of regeneration current has high power conversion efficiency.

For example, in Patent literature 6 (JPA 2010-40878), a configuration for controlling the electric current flowing to the LED to be constant with use of a step-down chopper circuit operating in the critical mode is disclosed. In addition, in accordance with paragraphs 35 and 40 of the literature, it is proposed to control, in the PWM, a drive signal of a switching element of the step-down chopper circuit on the basis of a dimming signal.

However, the proposal of Patent literature 6 is understood in the meaning that an on-pulse width of the switching element is controlled in the PWM, and accordingly there is a problem that when the on-pulse width is controlled to be arbitrarily variable on the basis of the dimming signal in the switching power source circuit operating in the critical mode, time for the regeneration current to be zero-cross varies, and thus a switching frequency varies in a wide range (refer to Fig. 15(e)). Also, even if the PWM control of Patent literature 6 is understood in the meaning that the high frequency switching operation is intermittently stopped on the basis of a low-frequency PWM signal, the dimming cannot be realized in that case only within a range where the PWM signal can be varied, and accordingly there is a problem that a dimming range is limited.

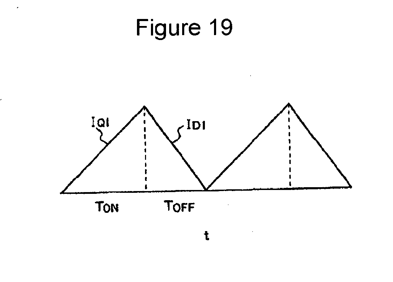

Additionally, in Patent literature 6, an LED lighting device for controlling an electric current flowing to a light emitting diode (LED) due to a step-down chopper circuit operating in so-called critical mode is disclosed. Here, as shown in Fig. 19, the critical mode is a control mode where energy accumulated in an inductance element during an on-period TON of the switching element is emitted during an off-period TOFF of the switching element and where the switching element is turned on again at the timing when the energy emission is completed, and thus the power conversion efficiency becomes higher in comparison with other control modes. In addition, since a half of peak value of the switching current is an effective value of a load current, the constant current control can be easily realized.

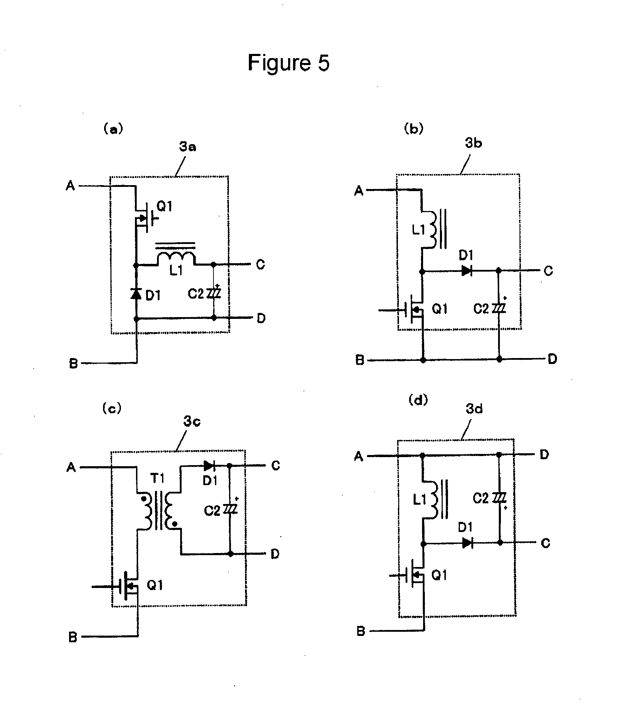

For example, the case where a switching element Q1 of a step-down chopper circuit 3a shown in Fig. 5(a) is operated in the critical mode will be explained. Between an input terminal A and an input terminal B, a direct-current voltage obtained by stepping-up the commercially-available alternating-current power source by using a step-up chopper circuit is supplied, and between an output terminal C and an output terminal D, an LED series circuit or a load circuit configured by connecting the plurality of series circuits in parallel is connected. When the switching element Q1 is turned on, an electric current IQ1 shown in Fig. 19 flows via a switching element Q1, an inductor L1, and a capacitor C2, and thus energy is accumulated in the inductor L1. When the switching element Q1 is turned off, a counter electromotive force is generated due to the energy accumulated in the inductor L1, and thus a regeneration current ID1 flows in a path from the inductor L1, to the capacitor C2, and then to a diode D1. Upon turning on the switching element Q1 again at timing when the regeneration current ID1 returns to zero, a switching loss is small and a down period of the current is not generated, and accordingly the power conversion efficiency becomes higher in comparison with other control modes.

In paragraphs [0035] and [0040] of Patent literature 6, although the PWM control of the on-period TON of the switching element Q1 based on an external dimming signal is proposed, a concrete circuit configuration is not disclosed. In addition, a configuration to carry out, at the factory shipment, an output adjustment to variations of characteristics of LEDs and to variations of circuit constant such as an inductance and to carry out an output adjustment to temperature variations, aged deterioration, and the like easily at low cost is also not suggested.

WO 2010/045666 A1 describes a lighting device of a semiconductor light emitting element comprising a switching element, an inductance component, a regeneration diode, current detection means, and control means in accordance with the preamble of independent claim 1 and discloses a first dimming operation for reducing a photo output of the semiconductor lighting element by intermittently stopping the high frequency on-off operation of the switching element at a low frequency which is sufficiently lower than the on-off frequency of the switching element, and a second dimming operation for varying the photo output of the semiconductor light emitting element by varying the predetermined value of the current to be detected by the current detection means to turn off the switching element.

### [Disclosure of the Invention]

### [Problems to be solved by the Invention]

In a lighting device of a semiconductor light emitting element for controlling a switching element to be turned off when an electric current flowing to an inductance component at on-time of the switching element and for controlling the switching element to be turned on when the electric current emitted via a regeneration diode from the inductance component to a semiconductor light emitting element becomes zero at off-time of the switching element, the present invention intends to propose circuit means adapted to light and dimming the semiconductor light emitting element with high accuracy in a simple configuration.

Additionally, in the case where an LED is lighted and dimmed with use of a switching power source circuit operating in a critical mode, the present invention intends to realize the dimming in a broad range, restricting a variable range of the switching frequency within a predetermined range.

In a lighting device for controlling a current flowing to the semiconductor light emitting element with use of a power conversion circuit operating in the critical mode, the present invention intends to realize an output adjustment in a simple configuration.

### [Means adapted to solve the Problems]

To solve the above-mentioned problem, the present invention provides a lighting device of a semiconductor light emitting element as claimed in independent claim 1 and an illumination fixture as claimed in claim 13. Preferred embodiments of present invention are subject-matter of dependent claims.

The present invention provides a lighting device of a semiconductor light emitting element including a switching element Q1 connected in series to a direct-current power source and controlled to be turned on and off at a high-frequency wave; an inductor L1 which is connected in series to the switching element Q1 and to which an electric current flows from the direct-current power source at on time of the switching element Q1; a regeneration diode D1 for emitting energy accumulated in the inductor L1 at the on-time of the switching element Q1 to the semiconductor light emitting element 4 at off-time of the switching element Q1; current detection means (a resistance R1) adapted to detect an electric current flowing to the switching element Q1; and control means 5 for turning off the switching element Q1 when a current value detected by the current detection means reaches a predetermined value and for turning on the switching element Q1 when the emission of energy of the inductor L1 is completed, wherein the control means 5 is arranged to provide a first dimming operation for reducing a photo output of the semiconductor lighting element 4 by intermittently stopping the high frequency on-off operation of the switching element Q1 at a low frequency which is sufficiently lower than the on-off frequency of the switching element Q1, and a second dimming operation for varying the photo output of the semiconductor light emitting element 4 by varying the predetermined value. According pot present invention the control means 5 is arranged to combine the first dimming operation and the second dimming operation such as to restrict the on-off frequency of the switching element Q1 in a frequency range between a predetermined maximum frequency fmax and minimum frequency fmin.

According to present invention, since a dimming operation for intermittently stopping the on-off operation of the switching element and a dimming operation for variably controlling the peak value of the current flowing to the switching element are combined, and thereby the on-off frequency of the switching element is restricted in a frequency range between the predetermined maximum frequency and minimum frequency; accordingly the on-off frequency of the switching element is prevented from being too high and from being too low.

### [Brief Description of the Drawings]

[Fig. 1] Fig. 1 is a circuit diagram of a lighting device according to a first embodiment of the present invention.
[Fig. 2] Fig. 2 is a circuit diagram simplifying and showing an internal configuration of a controlling integration circuit used for the lighting device according to the first embodiment of the present invention.
[Fig. 3] Fig. 3 is a block circuit diagram showing an overall configuration of an LED dimming lighting device using the lighting device according to the first embodiment of the present invention.
[Fig. 4] Fig_{.} 4 is a circuit diagram of a lighting device of a first modified example according to the first embodiment of the present invention.
[Fig. 5] Fig. 5 is a circuit diagram of various types of switching power source circuit to which the present invention can be applied.
[Fig. 6] Fig. 6 is a cross section view showing a schematic configuration of an illumination fixture of a fourth modified example according to the first embodiment of the present invention.
[Fig. 7] Fig. 7 is a circuit diagram of a conventional example.
[Fig.8] Fig. 8 is a circuit diagram of a lighting device according to a second embodiment of the present invention.
[Fig. 9] Fig. 9 is a circuit diagram simplifying and showing an internal configuration of a controlling integration circuit used for the lighting device according to the second embodiment of the present invention.
[Fig. 10] Fig. 10 is a block circuit diagram showing an overall configuration of an LED dimming lighting device using the lighting device according to the second embodiment of the present invention.
[Fig. 11] Fig. 11 is a circuit diagram showing a configuration example of a main part according to the second embodiment of the present invention.
[Fig. 12] Fig. 12 is a circuit diagram of the lighting device of a second modified example according to the second embodiment of the present invention.
[Fig. 13] Fig. 13 is a circuit diagram of a conventional example.
[Fig. 14] Fig. 14 is a circuit diagram of a lighting device according to a third embodiment of the present invention.
[Fig. 15] Fig. 15 is an operation explanation view showing a dimming control example according to the third embodiment of the present invention.
[Fig. 16] Fig. 16 is a circuit diagram showing a configuration example of a main part of the lighting device of a first modified example according to the third embodiment of the present invention.
[Fig. 17] Fig. 17 is a circuit diagram of a lighting device according to a fourth embodiment of the present invention.
[Fig. 18] Fig. 18 is a circuit diagram showing a configuration example of a main part of the lighting device of a third modified example according to the fourth embodiment of the present invention.
[Fig. 19] Fig. 19 is an operation waveform diagram of a conventional LED lighting device.

### [Best Mode for Carrying Out the Invention]

### (First embodiment)

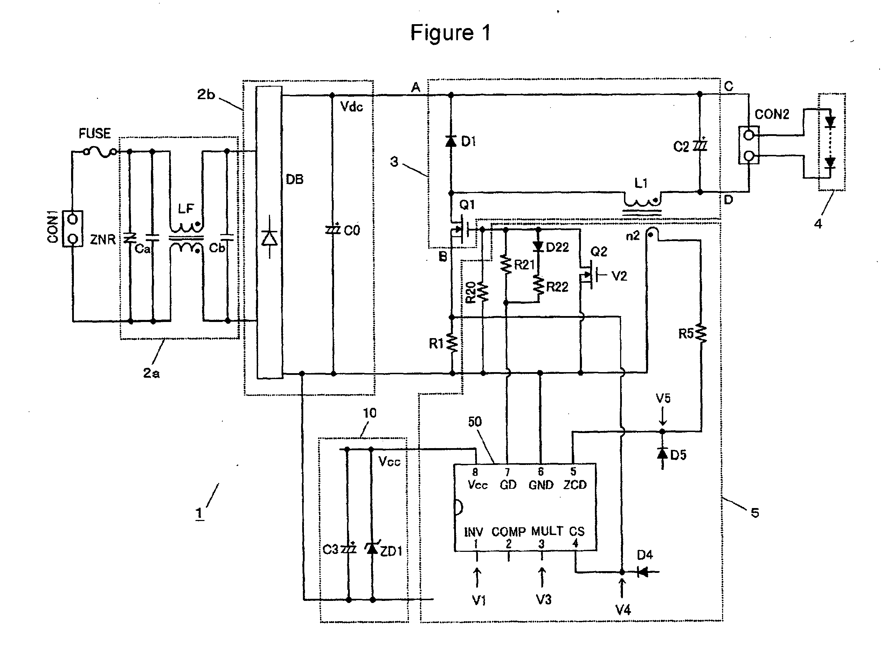

Fig. 1 is a circuit diagram of a lighting device according to a first embodiment of the present invention. The lighting device includes a power source connector CON1 and an output connector CON2. To the power source connector CON1, a commercially-available alternating-current power source (100V, 50/60Hz) is connected. To the output connector CON2, a semiconductor light emitting element 4 such as a light emitting diode (LED) is connected. The semiconductor light emitting element 4 may be an LED module configured by connecting a plurality of LEDs in series, in parallel, or in series and parallel.

To the power source connector CON1, a direct-current power source circuit 2b is connected via a current fuse FUSE and a filter circuit 2a. The filter circuit 2a includes: a surge voltage absorbing element ZNR, a filter capacitors Ca and Cb, and a common mode chalk coil LF. Although a circuit as a rectifying smoothing circuit including: a full-wave rectifier DB and a smoothing capacitor C0 is shown here, the direct-current circuit 2b may be a power factor improving circuit using a step-up chopper circuit.

To an output terminal of the direct-current power source circuit 2b, a step-down chopper circuit 3 is connected. The step-down chopper circuit 3 includes: an inductor L1 connected in series to the semiconductor light emitting element 4 lighted by the direct current electricity; a switching element Q1 connected in series between: a series circuit of the inductor L1 and the semiconductor light emitting element 4, and an output of the direct-current power source circuit 2b; and a regeneration diode D1 connected in parallel to the series circuit of the inductor L1 and the semiconductor light emitting element 4 and connected in a direction to emit accumulated energy of the inductor L1 to the semiconductor light emitting element 4 when the switching element Q1 is turned off. In addition, an output capacitor C2 is connected in parallel with the semiconductor light emitting element 4. A capacity of the output capacitor C2 is set so that pulsation components caused by the turning on and off of the switching element Q1 can be smoothed and that the smoothed direct-current electricity can flow to the semiconductor light emitting element 4.

The switching element Q1 is driven at a high-frequency wave to be turned on and off by a control circuit 5. The control circuit 5 includes: a controlling integrated circuit 50 and the periphery circuits. As the controlling integrated circuit 50, the L6562 manufactured by the ST Microelectronics Corporation is employed here. The chip (L6562) is originally a controlling IC for the PFC circuit (a step-up chopper circuit for control of the power factor improvement), and internally includes some extra components not used for the control of the step-down chopper circuit, such as a multiplier circuit. On the other hand, for a control to make an average value of the input current to be a similarity shape with an envelope line of the input voltage, a function to control a peak value of the input current and a zero-cross control function are included in one chip, and these functions are diverted to the control of the step-down chopper circuit.

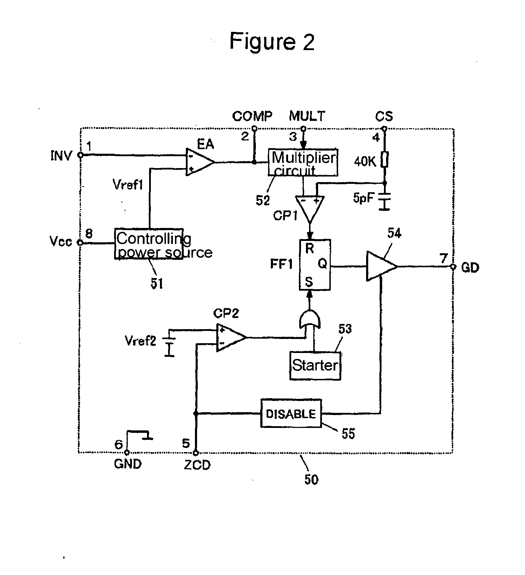

Fig. 2 simplified and shows an internal configuration of the controlling integrated circuit 50 used in the present embodiment. A first pin (INV) is an inverted input terminal of a built-in error amplifier EA, a second pin (COMP) is an output terminal of the error amplifier EA, a third pin (MULT) is an input terminal of the multiplier circuit 52, a fourth pin (CS) is a chopper current detection terminal, a fifth pin (ZCD) is a zero-cross detection terminal, a sixth pin (GND) is a ground pin, a seventh pin (GD) is a gate drive terminal, and an eighth pin (Vcc) is a power source terminal.

When a controlling power source voltage equal to or more than a predetermined voltage is supplied between a power source terminal Vcc and a ground terminal GND, reference voltages Vref1 and Vref2 are generated by the controlling power source 51, and each internal circuit of the integrated circuit becomes ready to operate. Upon supplying the power source, a start pulse is supplied to a set input terminal S of a flip-flop FF1 by a starter 53, and thereby a Q output of the flip-flop FF1 becomes a High level. In this manner, the seventh pin (a gate drive terminal GD) becomes a High level via the driving circuit 54.

When the seventh pin (the gate drive terminal GD) becomes a High level, a gate drive voltage divided by resistances R21 and R20 of Fig. 1 is applied between the gate and source of the switching element Q1 including a MOSFET. The resistance R1 is a small resistance used for current detection, and accordingly influences little the drive voltage between the gate and source.

When the switching element Q1 is turned on, the electric current flows from a positive terminal of the capacitor C0 to a negative terminal of the capacitor C0 via: the output capacitor C2, the inductor L1, the switching element Q1 and the resistance R1. On this occasion, unless the inductor L1 is magnetically saturated, a chopper current i flowing to the inductor L1 becomes an electric current that substantially linearly rises. The current is detected by the resistance R1, and is inputted to the fourth pin (CS) of the controlling integrated circuit 50.

The fourth pin (CS) of the controlling integrated circuit 50 is a chopper current detection terminal, and the voltage is applied to a +(plus) input terminal of the comparator CP1 via noise filters of 40KΩ and 5pF in the IC. To a -(minus) input terminal of the comparator CP1, a reference voltage is applied. The reference voltage is determined by: an applied voltage V1 of the first pin (INV) and an applied voltage V3 of the third pin (MULT).

When the voltage of the chopper current detection terminal CS exceeds the reference voltage, the output of the comparator CP1 becomes a High level, and then a reset signal is inputted to a reset input terminal R of the flip-flop FF1. In this manner, a Q output of the flip-flop FF1 becomes a Low level. On this occasion, since the driving circuit 54 operates so as to attract the current from the seventh pin (the gate drive terminal GD), a diode D22 of Fig. 1 is turned on, an electric charge between the gate and source of the switching element Q1 is drawn via the resistance R22, and thus the switching element Q1 including the MOSFET is rapidly turned off.

When the switching element Q1 is turned off, the electromagnetic energy accumulated in the inductor L1 is emitted to the output capacitor C2 via the regeneration diode D1. On this occasion, since a voltage between both ends of the inductor L1 is clamped by the voltage Vc2 of the output capacitor C2, the current i of the inductor L1 is decreased along a substantially-constant slope (di/dt ≈ -Vc2/L1).

When the voltage Vc2 of the capacitor C2 is high, the current i of the inductor L1 rapidly attenuates, and when the voltage Vc2 of the capacitor C2 is low, the current i of the inductor L1 slowly attenuates. Accordingly, even when a peak value of a current flowing to the inductor L1 is constant, time until the current i of the inductor L1 disappears will change. The higher the voltage Vc2 of the capacitor C2 is, the shorter the required time is, and the lower the voltage is, the longer the time is.

During a period when the current i flows to the inductor L1, in a secondary winding n2 of the inductor L1, a voltage corresponding to the slope of the current i of the inductor L1. When the current i of the inductor L1 finishes flowing, the voltage will disappears. The timing is detected by the fifth pin (the zero-cross detection terminal ZCD).

To the fifth pin (the zero-cross detection terminal ZCD) of the controlling integrated circuit 50, a -(minus) input terminal of the comparator CP2 for the zero-cross detection is connected. To a +(plus) input terminal of the comparator CP2, the reference voltage Vref2 for the zero-cross detection is connected. When the voltage of the secondary wiring n2 applied to the fifth pin (the zero-cross detection terminal ZCD) disappears, the output of the comparator CP2 becomes a High level, a set pulse is supplied via an OR gate to the set input terminal S of the flip-flop FF1, and then the Q output of the flip-flop FF1 becomes a High level. Thus, the seventh pin (the gate drive terminal GD) becomes a High level via the driving circuit 54. The same operations will be repeated below.

In this manner, for the output capacitor C2, a direct-current voltage that is stepped down from the output voltage of the capacitor C0 can be obtained. The direct-current voltage is supplied via the output connector CON2 to the semiconductor light emitting element 4. In the case where a light emitting diode (LED) is used as the semiconductor light emitting element 4, when a forward voltage of the LED is Vf and the number of series connections is n, the voltage Vc2 of the output capacitor C2 is clamped approximately at n × Vf.

When the number n of series connections of the LEDs is large, the voltage Vc2 of the output capacitor C2 is high, and accordingly a voltage difference with respect to the voltage Vdc of the capacitor C0 (Vdc - Vc2) becomes small. Accordingly, the voltage separately loaded to the inductor L1 at the turning on of the switching element Q1 becomes small, and thus a rising speed di/dt = (Vdc - Vc2)/L1 of the current i flowing to the inductor L1 becomes slow. As a result, time until the current i flowing to the inductor L1 reaches a predetermined peak value will be long, and accordingly the on-time of the switching element Q1 will be long.

During the switching element Q1 is turned off, a counter electromotive force generated at both ends of the inductor L1 is clamped at the voltage Vc2 (= n × Vf) of the capacitor C2. Accordingly, when the number n of series connections of the LEDs is large, the voltage applied to the inductor L1 at the turning off of the switching element Q1 becomes large, and thus an attenuating speed di/dt = -Vc2/L1 of the current i flowing to the inductor L1 becomes fast. As a result, time until the current i flowing to the inductor L1 becomes zero will be short, and accordingly the off-time of the switching element Q1 will be short.

On the contrary to the above-mentioned explanation, when the number n of series connection of the LEDs, the on-time of the switching element Q1 becomes short and the off-time becomes long. That is, when the number n of series connection of the LEDs is small, the voltage Vc2 of the output capacitor C2 is low, and accordingly a voltage difference (Vdc - Vc2) with respect to the voltage Vdc of the capacitor C0 becomes large. Accordingly, the voltage separately loaded to the inductor L1 at the turning on of the switching element Q1 becomes large, and thus the rising speed di/dt = (Vdc - Vc2)/L1 of the current i flowing to the inductor L1 becomes fast. As a result, time until the current i flowing to the inductor L1 reaches a predetermined peak value will be short, and accordingly the on-time of the switching element Q1 will be short.

During the switching element Q1 is turned off, the counter electromotive force generated at the both ends of the inductor L1 is clamped at the voltage Vc2 (= n × Vf) of the capacitor C2. Accordingly, when the number n of series connections of the LEDs is small, the voltage applied to the inductor L1 at the turning off of the switching element Q1 becomes small, and thus the attenuating speed di/dt = -Vc2/L1 of the current i flowing to the inductor L1 becomes slow. As a result, time until the current i flowing to the inductor L1 becomes zero will be long, and accordingly the off-time of the switching element Q1 will be long.

As described above, according to the lighting device of the present embodiment, when the number n of series connections of the LEDs is large, the on-time of the switching element Q1 automatically becomes long and the off-time automatically becomes short; and when the number n of series connections of the LEDs is small, the on-time of the switching element Q1 automatically becomes short and the off-time automatically becomes long. Accordingly, regardless of the number n of series connections of the LEDs, a configuration able to maintain a constant current characteristic is achieved.

In addition, a detailed configuration of the controlling power source circuit 10 is not limited; however, the smoothing capacitor C3 and the zener diode ZD1 for regulating the voltage are included here. In a simplest example, a configuration to supply a charging current via a high resistance from a positive electrode of the capacitor C0 to a positive electrode of the capacitor C3 may be employed. As more efficient power source supply means, a configuration so as to constantly charge the capacitor C3 from the secondary wiring n2 of the inductor L1 may be employed.

Additionally, in the present embodiment, the timing when the current flowing to the inductor L1 becomes substantially zero is detected by detecting the timing of the voltage disappearing of the secondary wiring n2 of the inductor L1; however, if a means able to detect the timing of disappearing of the regeneration current is employed as another means, for example, detecting of the rising of a counter direction voltage of the regeneration diode D1 and detecting of the stepping down of the voltage between both ends of the switching element Q1, the concrete means may be changed.

According to the configuration of the present embodiment, an average value of the chopper current changes very little even if the load is different. Accordingly, regardless of the load, an effective value of the output current supplied to the load by smoothing the pulsation components of the chopper current with use of the output capacitor C2 becomes substantially zero.

Then, the output current based on duties of the PWM signal can be supplied to the semiconductor light emitting element 4 by intermittently stopping the high-frequency chopper operation on the basis of a low-frequency PWM signal, and thereby the dimming with high precision can be realized.

For this purpose, in the embodiment of Fig. 1, the switching element Q2 is connected between: the controlling electrode of the switching element Q1 and the ground, and thus the gate voltage V2 of the switching element Q2 is controlled on the basis of the low-frequency PWM signal; or any one of: the applied voltage V1 of the first pin (INV) of the controlling integrated circuit 50, the applied voltage V3 of the third pin (MULT), the applied voltage V4 of the fourth pin (CS), and the applied voltage V5 of the fifth pin (ZCD) is controlled on the basis of the low-frequency PWM signal. These means may be carried out by combining two or more means and may be carried out by selecting any one of them.

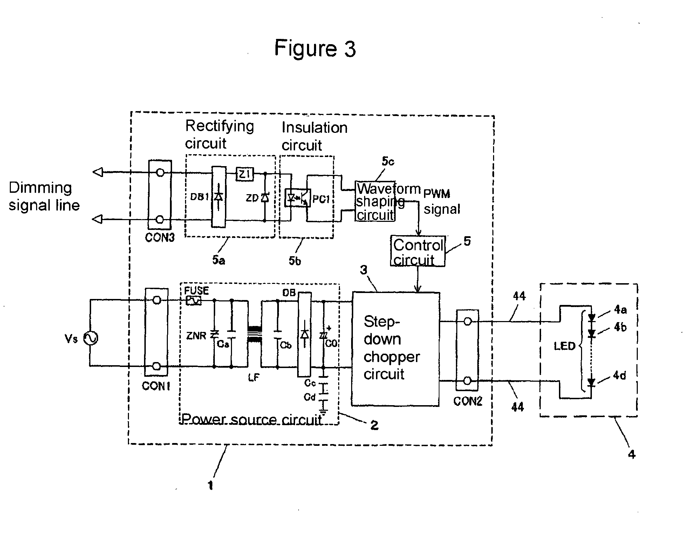

The respective means will be separately explained below.
At first, the case where the switching element Q2 is controlled to be turned on and off on the basis of the low-frequency PWM signal will be explained. The low-frequency PWM signal is a rectangular wave voltage signal of, for example, 1kHz, and is a dimming signal; the longer a period of a Low level in one cycle is, the larger the dimming output becomes. The type of PWM signal is widely used in a field of the dimming lighting device for a fluorescent light, and is, as shown in Fig. 3, supplied from a dimming signal line via the connector CON3 of the lighting device 1 and inputted to the controlling circuit 5 via a rectifier circuit 5a, an insulation circuit 5b, and a waveform shaping circuit 5c.

Here, the low-frequency PWM signal is the gate voltage V2 of the switching element Q2, and when the gate voltage V2 is in a High level, the switching element Q2 is turned on to short between: the controlling electrode of the switching element Q1; and the ground. In addition, when the gate voltage V2 is in a Low level, the switching element Q2 is turned off (a high impedance state) to be in the same state as non-connected state.

During the switching element Q2 is turned on, a connecting point between the resistance R21 and the switching element Q2 is constantly in a Low level. Accordingly, even when the seventh pin (the gate drive terminal GD) of the controlling integrated circuit 50 is switched to the High/Low by the high-frequency wave, the gate drive output is consumed by the resistance R21, and thereby the switching element Q1 is maintained in the off-state. On this occasion, as a first modified example described later of the first embodiment, the operation of the IC may be stopped by shorting the fifth pin of the controlling integrated circuit 50 to the ground. In any means, the chopper operation will be in the stopped state.

In the case where the switching element Q2 is turned off, since the switching element Q1 is switched to be on/off in accordance with the switching at the high-frequency wave of the seventh pin (the gate drive terminal GD) of the controlling integrated circuit 50, the chopper operation will be in a normal state.

Hence, a ratio between the chopper operation period and the chopper operation stopping period coincides with a ratio between a Low level period and a High level period of the PWM signal. A constant current is supplied in the chopper operation period and a current supply is stopped in the chopper operation stopping period, and consequently an electric current depending on a ratio of the Low level period to one cycle of the PWM signal is supplied to the semiconductor light emitting element 4. In this manner, the dimming with high precision can be realized.

Next, the case where the applied voltage V1 of the first pin (INV) of the controlling integrated circuit 50 is controlled on the basis of the low-frequency PWM signal will be explained. The higher the applied voltage V1 of the first pin (INV) becomes, the lower the peak value of the current flowing to the switching element Q1 is controlled to be. Then, for example, when the low-frequency PWM signal is in a High level, the applied voltage V1 of the first pin (INV) is set to be high, and when the low-frequency PWM signal is in a Low level, the applied voltage V1 of the first pin (INV) is set to be low. In the period when the applied voltage V1 is high, the peak value of the current flowing to the switching element Q1 is controlled to be low, and in the period when the applied voltage V1 is low, the peak value of the current flowing to the switching element Q1 is controlled to be high; accordingly the dimming can be carried out by changing the ratio of the respective periods.

Next, the case where the applied voltage V3 of the third pin (MULT) of the controlling integrated circuit 50 is controlled on the basis of the low-frequency PWM signal will be explained. The higher the applied voltage V3 of the third pin (MULT) becomes, the higher the peak value of the current flowing to the switching element Q1 is controlled to be. Then, for example, when the low-frequency PWM signal is in a High level, the applied voltage V3 of the third pin (MULT) is set to be low, and when the low-frequency PWM signal is in a Low level, the applied voltage V3 of the third pin (MULT) is set to be high. In the period when the applied voltage V3 is high, the peak value of the current flowing to the switching element Q1 is controlled to be high, and in the period when the applied voltage V3 is low, the peak value of the current flowing to the switching element Q1 is controlled to be low; accordingly the dimming can be carried out by changing the ratio of the respective periods.

And, next, the case where the applied voltage V4 of the fourth pin (CS) of the controlling integrated circuit 50 is controlled on the basis of the low-frequency PWM signal will be explained. As described above, when the applied voltage V4 of the fourth pin (CS) becomes higher than the internal reference voltage (the applied voltage of the -(minus) input terminal of the comparator CP1), the switching element Q1 is controlled to turned off. Then, for example, when the low-frequency PWM signal is in a High level, the applied voltage V4 of the fourth pin (CS) is controlled so as to rapidly reach the reference voltage. As concrete means, the detection voltage of the fourth pin (CS) is increased in a quasi method to superpose a direct-current current on the resistance R1 via the diode D4, and thereby the applied voltage V4 of the fourth pin (CS) is controlled so as to rapidly reach the reference voltage. In this case, the peak value of the current flowing to the switching element Q1 becomes lower than the normal value. In addition, when the low-frequency PWM signal is in a Low level, the operation is returned to the normal operation by removing the superposed current flowing via the diode D4. In this control, when the low-frequency PWM signal is in a High level, the peak value of the current flowing to the switching element Q1 becomes lower than the normal value, and when the low-frequency PWM signal is in a Low level, the peak value of the current flowing to the switching element Q1 returns to the normal value. In this manner, the dimming can be carried out on the basis of a ratio between a Low level period and a High level period of the low-frequency PWM signal.

In addition, as an extreme case, when the low-frequency PWM signal is in a High level, the applied voltage V4 of the fourth pin (CS) may be controlled so as to be constantly higher than the reference voltage (the applied voltage of the -(minus) input terminal of the comparator CP1). In this case, the on-time of the switching element Q1 becomes approximately zero, and the chopper operation will substantially stop.

Next, the case where the applied voltage V5 of the fifth pin (ZCD) of the controlling integrated circuit 50 is controlled on the basis of the low-frequency PWM signal will be explained. As described above, when the applied voltage V5 of the fifth pin (ZCD) negatively rises, the switching element Q1 is controlled to be turned on again. Then, for example, when the low-frequency PWM signal is in a High level, the applied voltage V5 of the fifth pin (ZCD) is controlled so as not to negatively rise. As concrete means, a direct-current voltage is superposed via the diode D5. In addition, when the low-frequency PWM signal is in a Low level, the operation is returned to the normal operation by removing the superposed voltage applied via the diode D5. In this control, when the low-frequency PWM signal is in a High level, the switching element Q1 is not turned on, and when the low-frequency PWM signal is in a Low level, the switching element Q1 is controlled to be turned on/off. In this manner, the dimming can be carried out on the basis of the ratio between the Low level period and the High level period of the low-frequency PWM signal.

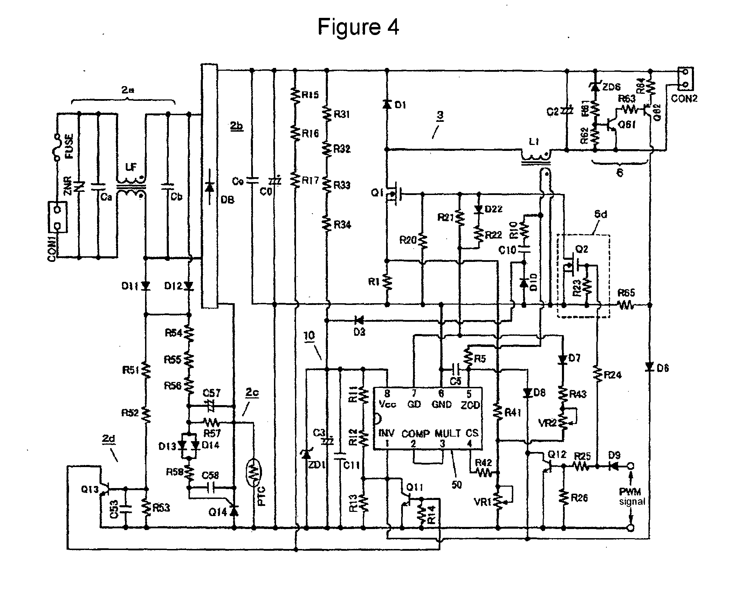

In addition, as another means explained in the first modified example described later (Fig. 4) of the first embodiment, the operation of the IC may be controlled to be stopped by shorting the fifth pin (ZCD) of the controlling integrated circuit 50 to the ground in synchronization with the PWM signal. As described above, in the case where the L6562 manufactured by the ST Microelectronics Corporation is employed as the controlling integrated circuit 50, a disable circuit 55 is connected to the fifth pin (ZCD) as the zero-cross detection terminal as shown in Fig. 2, and accordingly when the fifth pin is shorted to the ground, the operation of the IC can be stopped. Then, when the low-frequency PWM signal is in a High level, the fifth pin (ZCD) is shorted to the ground to stop the operation of the IC, and when the low-frequency PWM signal is in a Low level, the fifth pin (ZCD) is opened to return the operation to the normal operation. In this manner, the dimming can be carried out on the basis of the ratio between the Low level period and the High level period of the low-frequency PWM signal.

An overall configuration of the LED dimming lighting device 1 incorporating the lighting device of Fig. 1 is shown in Fig. 3. A power source circuit 2 is configured by including the above-mentioned filter circuit 2a and the direct-current power source 2b. The capacitors Cc and Cd are capacitors used for connecting a circuit ground (a negative electrode of the capacitor C0) to a fixture chassis in a high-frequency manner. CON1 is a power source connector connected to a commercially-available alternating-current power source Vs, CON2 is an output connector connected to the semiconductor light emitting element 4 via a lead line 44, and CON3 is a connector for connecting a dimming signal line. To the dimming signal line, a dimming signal including a duty-variable rectangular wave voltage signal having 1kHz-frequency and 10V-amplitude is supplied.

The rectifier circuit 5a connected to the connector CON3 is a circuit for making a wire of the dimming signal line be non-polarized, is configured so as to be able to normally operate even if the dimming signal line is inversely connected. That is, the inputted dimming signal is rectified in full-wave by a full-wave rectifier DB1, and thereby the rectangular wave voltage signal is obtained at both ends of the zener diode ZD via an impedance element Z1 such as a resistance. The insulation circuit 5b has a photo coupler PC1, and transfers the rectangular wave voltage signal with insulating the dimming signal line and the lighting device. The waveform shaping circuit 5c is a circuit for: shaping a waveform of signal outputted from the photo coupler PC1 of the insulating circuit 5b and outputting the signal as the PWM signals clearly distinguishable whether in a High level or in a Low level. Since the rectangular wave voltage signal transferred through a long distance via the dimming signal line has a distorted waveform, the waveform shaping circuit 5c is provided.

In a conventional inverter-type fluorescent lamp dimming lighting device, a low-pass filter circuit such as a CR integration circuit (a smoothing circuit) is provided after the waveform shaping circuit 5c to generate an analog dimming voltage, and an inverter frequency and the like are variably controlled on the basis of the dimming voltage; however, in the present embodiment, the PWM signal after the waveform shaping is directly inputted to the control circuit 5 (refer to Fig. 5). In the control circuit 5, in the period when the PWM signal is in a High level, the chopper operation of the step-down chopper circuit 3 is stopped, and in the period when the PWM signal is in a Low level, the chopper operation of the step-down chopper circuit 3 is allowed; thereby magnitude of the direct-current electricity that is smoothed by the output capacitor C2 of the step-down chopper circuit 3 and is supplied to the semiconductor light emitting element 4 is adjusted. That is, the control circuit 5 and the step-down chopper circuit 3 consequently serve as a low-pass filter circuit for smoothing the PWM signal.

Meanwhile, when the dimming signal line is broken or when the connection of the connector CON3 is disconnected, the PWM signal is constantly in a Low level,; however, in that case, since the chopper operation of the step-down chopper circuit 3 is constantly allowed, the semiconductor light emitting element 4 will be in a fully lighted state.

### (First modified example of first embodiment)

Fig. 4 is a circuit diagram of the lighting device of a first modified example according to the first embodiment. According to the present embodiment, in the basic configuration of Fig. 1, the control is carried out so that when the PWM signal is in a High level, the gate voltage V2 of the switching element Q2 can be in a High level and additionally that the applied voltage V1 of the first pin and the applied voltage V5 of the fifth pin both can be in a Low level, (can be shorted to the ground).

As described above, in the case where the L6562 manufactured by the ST Microelectronics Corporation is employed as the controlling integrated circuit 50, the disable circuit 55 is connected to the fifth pin (ZCD) serving as the zero-cross detection terminal as shown in Fig. 2, and when the fifth pin is shorted to the ground, the operation of the IC can be stopped. As mentioned in the first embodiment, the switching element Q1 can be maintained in the off-state only by turning on the switching element Q2; however, further by stopping the operation of the IC, a consumed current can be reduced.

The circuit configuration of Fig. 4 will be explained below, and the same numerals are added to components having the same function as that in the circuit configuration of Fig. 1 to omit the redundant explanations.

An alternating-current input terminal of the full-wave rectifier DB is connected via the filter circuit 2a and the current fuse FUSE to the power source connector CON1. A configuration of the filter circuit 2a is the same as that of Fig. 1.

A direct-current output terminal of the full-wave rectifier DB is connected via a positive characteristic thermistor PTC to the smoothing capacitor C0. The positive characteristic thermistor PTC is a thermistor whose resistance value becomes higher when a temperature is raised.

For example, the smoothing capacitor C0 has a capacity of approximately tens of µF. The capacitor Co connected in parallel to the smoothing capacitor C0 is a capacitor having a small capacity for a high-frequency by-pass.

Immediately after the power source is turned on, the direct-current output terminal of the full-wave rectifier DB is shorted by the uncharged smoothing capacitor C0, and thus so-called an inrush current flows. The positive characteristic thermistor PTC restricts the inrush current.

Meanwhile, after the smoothing capacitor C0 is charged, the current restriction due to the positive characteristic thermistor PTC is not required. In addition, wasted power consumption is generated.

Then, a reverse blocking triode thyristor (SCR) Q14 is connected in parallel with the positive characteristic thermistor PTC, and the thyristor Q14 is controlled to be turned on by the time the charging of the smoothing capacitor C0 is completed after the power source is turned on.

In order to generate a gate voltage of the thyristor Q14, each of anodes of diodes D11 and D12 are connected to each of the alternating-current input terminals of the full-wave rectifier DB, respectively, and cathodes of the diodes D11 and D12 are connected to a negative electrode of the direct-current output terminal of the full-wave rectifier DB via a series circuit of resistances R54, R55, R56, and R57.

To the resistance R57, an electrolytic capacitor C57 for a timer is connected in parallel. A capacity of the electrolytic capacitor C57 regulates a delay time until the thyristor Q14 is turned on after the power source is turned on.

When a voltage of the electrolytic capacitor C57 rises, the gate voltage is supplied to the thyristor Q14 via a parallel circuit of the diodes D13 and D14 and via the resistance R58. Meanwhile, a capacitor C58 connected in parallel between the gate and cathode of the thyristor Q14 is for prevention of a false operation.

The above-mentioned circuit including: the resistances R54 to R58, the capacitors C57 and C58, the diodes D11 to D14, the thyristor Q14, and the positive characteristic thermistor PTC configures a inrush current prevention circuit 2c.

The diodes D11 and D12 of the inrush current prevention circuit 2c are also used as a rectifier of a power discontinuity detection circuit 2d. The power discontinuity detection circuit 2d includes: a series circuit of the resistances R51, R52, and R53, a capacitor C53 connected in parallel to the resistance R53, and a transistor Q13 to which a forward bias is applied due to a voltage of the capacitor C53. The series circuit of the resistances R51 to R53 is preliminarily connected between: the cathodes of the diodes D11 and D12; and a negative electrode of the smoothing capacitor C0. When the alternating-current power source is applied, an electric current flows to the series circuit of the resistances R51 to R53, the capacitor C53 is charged, and then the transistor Q13 is turned on. When the alternating-current is blocked, the electric current via the series circuit of the resistances R51 to R53 is immediately blocked. Then, an electric charge of the capacitor C53 is discharged via the resistance R53, the forward bias of the transistor Q13 disappears, and accordingly the transistor Q13 is turned off.

Meanwhile, a capacity of the capacitor C53 is set so that the transistor Q13 can be turned off when a power-blocking state has continued in a few cycles of the alternating-current power source; in the case where the alternating-current power source is momentarily interrupted, in the case where a phase control is carried out, or near the zero-cross of the alternating-current power source, the transistor Q13 is never turned off.

On the other hand, even when the alternating-current power source is blocked, the electric current flowing from the smoothing capacitor C0 via the series circuit of resistances R15 to R17 is not blocked during a charged electric charge of the smoothing capacitor C0 remains. The present embodiment realizes a configuration where: a forward bias is applied to a transistor Q11 by the electric current supplied to the resistance R14 via the series circuit of the resistances R15 to R17 when the transistor Q13 of the power discontinuity detection circuit 2d is turned off, and then the first pin (INV) of the controlling integrated circuit 50 is shorted to the ground. On this occasion, the fifth pin (ZCD) is also shorted to the ground via the diode D8. In this manner, it is prevented that a photo output blinks at the power discontinuity.

The voltage of the smoothing capacitor C0 becomes a voltage near the peak value (approximately 140V) of the commercially-available alternating-current power source voltage (100V, 50/60Hz). A charging current is supplied from the smoothing capacitor C0 to the capacitor C3 for supplying a controlling power source voltage Vcc via resistances R31 to R34 used for the stepping-down.

When the voltage of the capacitor C3 rises to or more than an operable voltage of the controlling integrated circuit 50, the on-off operation of the switching element Q1 is started, a high-frequency chopping current flows to the inductor L1, and accordingly a high-frequency rectangular wave voltage is generated in the secondary winding. An electric current flows via a diode D10, a capacitor C10, and a resistance R10 due to the voltage generated in the secondary winding of the inductor L1 at the turning-on of the switching element Q1, and thus the capacitor C10 is charged. Since a voltage of reversed polarity is generated in the secondary winding of the inductor L1 at the turning-off of the switching element Q1, a charging current flows to the capacitor C3 via the diode D3 and the resistance R10 due to the voltage obtained by summing the generated voltage and the charging voltage of the capacitor C10. Accordingly, the voltage of the capacitor C3 tends to increasingly rise; however, since a zener diode ZD1 is connected in parallel, the constant controlling power source voltage Vcc is generated by being clamped with the zener voltage.

Meanwhile, the voltage of the capacitor C3 for supplying the controlling power source voltage Vcc is substantially tens of V. The capacitor C11 connected in parallel with the capacitor C3 is a capacitor having a small capacity for bypassing the high-frequency components of the charging current flowing via the diode D3.

The controlling power source voltage Vcc is divided by the resistances R11, R12, and R13, and is applied to the first pin (INV) of the controlling integrated circuit 50. As described above, the voltage is used for regulating the peak value of the current flowing to the switching element Q1.

The second pin (COMP) and third pin (MULT) of the controlling integrated circuit 50 are shorted in the present embodiment. To the fourth pin (CS), the detection voltage of the current detection resistance R1 is inputted via a series circuit of resistances R41 and R42. A variable resistance VR1 for adjusting a current detection sensitivity is preliminarily connected between: a connecting point of the resistances R41 and R42; and the ground. When a resistance value of the variable resistance VR1 is lowered, since the detection voltage of the current detection resistance R1 is divided by the resistance R41 and the variable resistance VR1 and is inputted to the fourth pin (CS), the current detection sensitivity can be lowered, and thereby the peak value of the current flowing to the switching element Q1 can be raised.

In addition, a direct-current voltage is superposed to the variable resistance VR1 from the seventh pin (GD) to supply the gate drive voltage of the switching element Q1 via a diode D7, a resistance R43, and a variable resistance VR2. When the resistance value of the variable resistance VR2 is lowered, since the superposed direct-current voltage is increased, the voltage of the fourth pin (CS) is increased, and accordingly the peak value of the current flowing to the switching element Q1 can be lowered.

The peak value of the current flowing to the switching element Q1 can be appropriately set by adjusting the two variable resistances VR1 and VR2. Here, the appropriate setting means that: it is appropriate for an upper limit value to be in a range where the inductor L1 is not magnetically saturated and in a range where the upper limit value does not exceed the maximum peak current of the switching element Q1 and for the lower limit value to be in a range where the operation frequency of the switching element Q1 does not become too high.

To the fifth pin (ZCD), a low-pass filter circuit including the resistance R5 and the capacitor C5 is connected. In addition, the fifth pin is connected to the first pin (INV) via the diode D8, and when the first pin (INV) is shorted to the ground due to the transistor Q11 or Q12, the potential of the fifth pin (ZCD) is also configured to be dropped to the ground potential.

The case where the transistor Q11 is turned on is the timing when the power discontinuity is detected as described above, and the case where the transistor Q12 connected in parallel to the transistor Q11 is turned on is the timing when the PWM signal is in a High level.

In the present embodiment, the PWM signal is a rectangular wave voltage signal of 1kHz, and when the signal is in a High level, the current flows via a diode D9, resistances R24 and R23, a voltage between both ends of the resistance R23 rises, the gate voltage of the switching element Q2 including the MOSFET exceeds a threshold voltage, and thereby the switching element Q2 is turned on. In addition, the current flows via a diode D9 and resistances R25 and R26, a voltage between both ends of the resistance R26 rises, and thereby the transistor Q12 is turned on. When the PWM signal is in a Low level,, both the switching element Q2 and the transistor Q12 are turned off.

Next, a no-load detection circuit 6 will be explained. The no-load detection circuit 6 includes a zener diode ZD6, resistances R61 to R64, and transistors Q61 and Q62. As shown in Fig. 3, to the output connector CON2, the semiconductor light emitting element 4 is co9nnected via a lead line 44. The semiconductor light emitting element 4 is configured by including a series circuit of a plurality of LEDs 4a to 4d. When the number of series connections is n and a forward voltage is Vf, the voltage of the output connector CON2 in a loaded connection is clamped approximately to n × Vf. The zener voltage of the zener diode ZD6 is set to be a little higher than the n × Vf.

If a loose connection is generated in the output connector CON2, for example, the lead line 44 is disconnected or broken, or any one of the plurality of LEDs is disconnected, the voltage of the output connector CON2 is not clamped at n × Vf. When the on-off operation of the switching element Q1 is continued in that condition, the voltage of the capacitor C2 will rise. Finally, when the voltage of the capacitor C2 exceeds the zener voltage of the zener diode ZD6, the current flows via the resistances R61 and R62 to turn on the transistor Q61, and the current flows via the resistances R63 and R64 to turn off the transistor Q62. In this manner, the current flows via the transistor Q62 and the resistance R65, a voltage is generated at both ends of the resistance R65, and thus the voltage of the first pin (INV) of the controlling integrated circuit 50 is raised via the diode D6. Accordingly, since the current peak value of the switching element Q1 is controlled to be low, the voltage rising of the capacitor C2 is suppressed.

### (Second modified example of first embodiment)

In the above-mentioned embodiment, the circuit example where the switching element Q1 of the step-down chopper circuit 3 is arranged on a lower potential side has been explained; however, as shown in Fig. 5(a), it is needless to say that the present invention can be also applied to the case where the switching element Q1 of the step-down chopper circuit 3a is arranged on a higher potential side.

Additionally, in the above-mentioned embodiments, a separately-excited control circuit using the controlling integrated circuit 50 shown as the control circuit in Fig. 2 was exemplified; however, an application range of the present invention is not limited to the example, and the present invention can be also applied to an LED lighting device using a self-exciting control circuit.

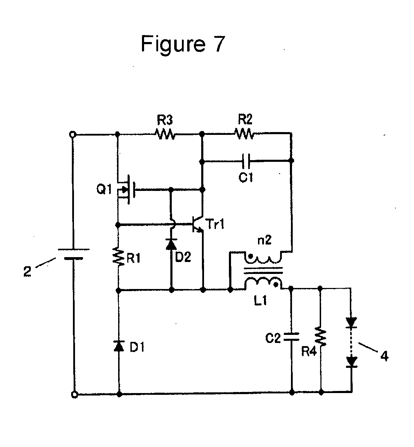

For example, as in a conventional example of Fig. 7, in a configuration where the switching element Q1 arranged on the higher potential side is controlled to be turned on and off by the self-exciting control circuit, when the diode D2 for conducting the regeneration current is replaced by a n-channel MOSFET (refer to the switching element Q2 of Fig. 1) to supply the low-frequency PWM signal to the gate electrode, the same state as that where the regeneration current flows (or the same state as that where the current flowing to the resistance R1 reaches a predetermined value) is realized during the n-channel MOSFET is conducted, and accordingly the dimming control according to the present invention can be carried out. In addition, during the normal oscillating operation, a reverse direction diode between the drain and source of the n-channel MOSFET also can be used as the diode D2 for conducting the regeneration current.

In the conventional example of Fig. 7, when the direct-current power source 2 is turned on, the switching element Q1 is turned on due to the resistance R3 for the start-up. When the switching element Q1 is turned on, the current flows in a path from the direct-current power source 2 to: the switching element Q1, the current detection resistance R1, the inductor L1, and then the capacitor C2, an electromagnetic energy is accumulated in the inductor L1. On this occasion, a feedback voltage from the secondary winding n2 of the inductor L1 is supplied to the control terminal of the switching element Q1 via a parallel circuit of the resistance R2 and the capacitor C1, and thus the switching element Q1 continues the on-state.

And, when the current flowing to the switching element Q1 reaches a predetermined value, a transistor Tr1 is turned on by the current detection resistance R1, and thus switching element Q1 is turned off. Then, an opposite direction electromotive force is generated in the secondary winding n2 of the inductor L1, the current flows to the parallel circuit of the resistance R2 and the capacitor C1 via the diode D2, the electric charge accumulated in the control terminal of the switching element Q1 is drawn, and the electric charge of the capacitor C1 is discharged.

In addition, the current due to the electromagnetic energy accumulated in the inductor L1 flows in a closed circuit of: the inductor L1, the capacitor C2, and the diode D1, the capacitor C2 is charged, and the electromagnetic energy of the inductor L1 is consumed. When the electromagnetic energy of the inductor L1 is consumed, the diode D2 is turned off, and the switching element Q1 is turned on again by the resistance R3 for the start-up. The same operations are repeated below, and when the charging voltage of the capacitor C2 is raised to the above-mentioned n × Vf, the light emitting diode 4 is lighted.

In the conventional example of Fig. 7, when the diode D2 for conducting the regeneration current is replaced by the n-channel MOSFET to supply the low-frequency PWM signal to the gate electrode, the above-mentioned self-exciting oscillating operation can be stopped and restarted in accordance with the High/Low of the PWM signal, and the dimming based on the off-duty of the PWM signal can be carried out. In addition, the n-channel MOSFET as a PWM switch also can be used as the diode D2 for conducting the regeneration current, and thus the number of parts can be reduced.

In addition, the present invention can be applied to various types of switching power source circuit as shown in Fig. 5(b) to (d). Fig. 5(b) is an example of a step-up chopper circuit 3b, Fig. 5(c) is an example of a flyback converter circuit 3c, and Fig. 5(d) is an example of a step-up/step-down chopper circuit 3d. These are examples, and accordingly if the switching power source circuit is configured to use a combination of: a peak current detection operation for controlling the switching element Q1 to be turned off when the current flowing to the inductance component (the inductor L1 or the transformer T1) at the turning-on of the switching element Q1 reaches a predetermined value; and a zero-cross detection operation for controlling the switching element Q1 to be turned on when the current emitted via the regeneration diode D1 from the inductance component at the turning-off of the switching element Q1 becomes substantially zero, the present invention can be applied to the switching power source circuit.

### (Third modified example of first embodiment)

In the above-mentioned embodiment, the case where the rectangular wave voltage signal of 1kHz is used as the PWM signal has been exemplified; however, the present invention is not limited to the example. For example, after rectifying in full-wave the alternating-current voltage to which the phase control is carried out, the voltage signal whose waveform is shaped may be used as the low-frequency PWM signal.

It is preferred that the frequency of the PWM signal is set to be in a range between 100Hz or more and 2kHz or less. When the frequency of the PWM signal becomes less than 100Hz, the blinking of the photo output is felt by human eyes. On the contrary, if the frequency of the PWM signal becomes higher than 2kHz, since a length of the oscillation period where the switching element Q1 operates to be turned on and off in one cycle of the PWM signal becomes short when the dimming is strengthened, the on-pulse number of the switching element Q1 included in the oscillation period cannot be controlled precisely, the on-pulse number discretely changes, and thereby the resolution of the dimming is deteriorated.

In the case where the frequency of the PWM signal is an audible frequency (especially rasping frequency of, for example, 1kHz), since a high-frequency noise such as a beep is generated from the chopper inductor L1, a countermeasure such as the adhering of a core and bobbin of the inductor and the securing them with varnish is preferably carried out.

Meanwhile, in the respective above-mentioned embodiments, since the output capacitor C2 is provided in parallel with the semiconductor light emitting element 4, even when the high-frequency switching operation of the switching element Q1 is intermittently stopped at the low-frequency in accordance with the PWM signal, the direct-current electricity flowing to the semiconductor light emitting element 4 becomes a smoothed current having less low-frequency ripples. That is, the semiconductor light emitting element 4 is continuously lighted by the smoothed direct-current electricity based on the off duty (a ratio of a Low level, period in one cycle) of the PWM signal. However, the output capacitor C2 is not necessarily required, and in the case where the output capacitor C2 is omitted or where the capacity is designed to be relatively small, the semiconductor light emitting element 4 can be intermittently lighted at the low frequency (that is, the blinking and lighting at a high speed that cannot be felt by the eyes).

As described above, in the case where the lighting device varying the photo output at the low frequency is used for a room illumination or an outdoor night illumination, if a monitoring video camera is installed in an illumination area, it is preferred for the PWM signal to be set to an integral multiple of an inverse of shutter speed of the video camera. For example, if the shutter speed of the video camera is 1/60 second, the frequency of the PWM signal is set to be any one of 60Hz, 120Hz, 180Hz, 240Hz, 300Hz, and so on. In addition, if the shutter speed of the video camera is 1/100 second, the frequency of the PWM signal is set to be any one of 100Hz, 200Hz, 300Hz, 400Hz, and so on. Moreover, if the shutter speed of the video camera is 1/120 second, the frequency of the PWM signal is set to be any one of 120Hz, 240Hz, 360Hz, 480Hz, and so on. Additionally, if the shutter speed of the video camera is 1/180 second, the frequency of the PWM signal is set to be any one of 180Hz, 360Hz, 540Hz, 720Hz, and so on. Furthermore, if the shutter speed of the video camera is 1/240 second, the frequency of the PWM signal is set to be any one of 240Hz, 480Hz, 720Hz, 960Hz, and so on. If the setting is carried out in this manner, a video image of the video camera can be prevented from being watched with blinking even when the photo output is varied at the low frequency.

Additionally, in the case where the lighting device according to the present invention is a light source device attached to the video camera, it is preferable that the PWM signal is switched in synchronization with the electric shutter of the video camera. For example, when a synchronization signal of the video camera is inputted to the lighting device and the semiconductor light emitting element is lighted only during an exposure period in synchronization with the timing of electronic shutter of the video camera, it is not required to consume a wasteful lighting power, and accordingly the power-saving can be achieved. As commonly-known, a CCD type video camera has an electric charge accumulation period and an electric charge transfer period, a photo current of the photo diode serving as a pixel is accumulated as an electric charge of each pixel in the electric charge accumulation period, and since the photo current of the photo diode serving as the pixel is not accumulated in the electric charge transfer period, it is preferable that the illumination is turned off in this period. In this manner, in the case where the video camera having the LED illumination is driven by a battery, life of the battery can be long.

### (Fourth modified example of first embodiment)

Fig. 6 shows a schematic configuration of an LED illumination fixture separately having a power source that uses the LED lighting device of the present invention. In the LED illumination fixture separately having a power source, the dimming lighting device 1 as a power source unit is incorporated in a case different from a chassis 42 of the LED module 40. In this manner, the LED module 40 ban be made thinner, and the dimming and lighting device 1 as the separately-provided power source unit can be installed in any place.

A fixture chassis 42 includes a metallic cylinder body whose lower end is opened, and a lower end opening portion is covered with a light diffusion plate 43. An LED module 40 is arranged so as to face the light diffusion plate 43. Numeral 41 represents an LED mounting substrate, which mounts LEDs 4a to 4d of the LED module 40. The fixture chassis 42 is embedded in a ceiling 100, and is wired via the lead line 44 and the connector 45 from the dimming and lighting device 1 as the power source unit arranged under the roof.

In the dimming lighting device 1 as the power source unit, the circuit shown in Fig. 3 is housed. The series circuit of the LEDs 4a to 4d (the LED module 40) corresponds to the above-mentioned semiconductor light emitting element 4.

### (Second embodiment)

Fig. 8 is a circuit diagram of a lighting device according to a second embodiment of the present invention. In the first embodiment of Fig. 1, the switching element Q2 is connected between the controlling electrode of the switching element Q1 and the ground to control the gate voltage V2 of the switching element Q2 in accordance with a low-frequency PWM signal, or any one of: the applied voltage V1 of the first pin (INV) of the controlling integrated circuit 50, the applied voltage V3 of the third pin (MULT), the applied voltage V4 of the fourth pin (CS), and the applied voltage V5 of the fifth pin (ZCD) is controlled in accordance with the low-frequency PWM signal. However, in the second embodiment, the switching element Q2 is not provided.

In addition, when a peak value of a current flowing to the switch Q1 is changed, an average value of the chopper current is constantly a half(1/2) of the peak value of the current flowing to the switching element Q1, and accordingly the dimming with high precision can be realized.

Accordingly, in the second embodiment, the applied voltage V1 of the first pin (INV) of the controlling integrated circuit 50 or the applied voltage V3 of the third pin (MULT) can be controlled. Or, a correction value can be added to and subtracted from the applied voltage V4 of the fourth pin (CS). These means may be carried out by combining two or more means, and may be carried out by selecting only one means.

The respective means will be separately explained below.

### (First example)

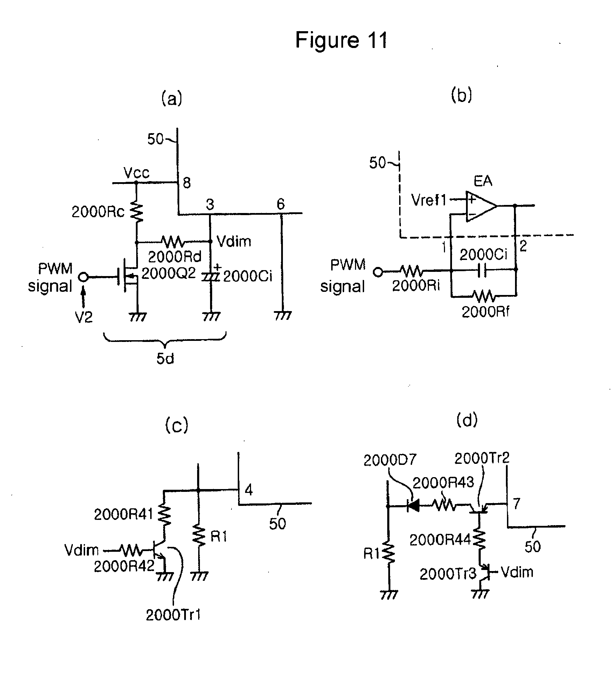

In an example of Fig. 11(a), the applied voltage V3 of the third pin (MULT) of the controlling integrated circuit 50 of the Fig. 8 is a dimming voltage Vdim depending on the duty of the low-frequency PWM signal, and the applied voltage V1 of the first pin (INV) is a constant value.

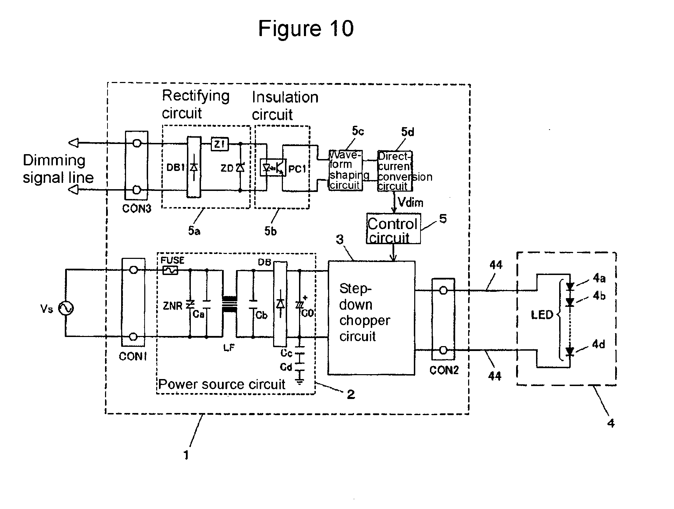

The low-frequency PWM signal is a rectangular wave voltage signal of, for example, 1kHz, and is a dimming signal; the longer a period of a Low level in one cycle is, the larger the dimming output becomes. The type of PWM signal is widely used in a field of the dimming lighting device for a fluorescent light, and is, as shown in Fig. 10, supplied from a dimming signal line via the connector CON3 of the lighting device 1 and inputted to the direct-current conversion circuit 5d via the rectifier circuit 5a, the insulation circuit 5b, and the waveform shaping circuit 5c. In the direct-current conversion circuit 5d, the low-frequency PWM signal is converted into an analog dimming voltage Vdim. In the control circuit 5, the semiconductor light emitting element 4 is controlled to be dimmed in accordance with the analog dimming voltage Vdim.

A simple configuration example of the direct-current conversion circuit 5d will be explained on the basis of Fig. 11(a). In the direct-current conversion circuit 5d, the low-frequency PWM signal is the gate voltage V2 of a switching element 2000Q2; when the gate voltage V2 is in a High level, the switching element 2000Q2 is turned on, and additionally when the gate voltage V2 is in a Low level, the switching element 2000Q2 is turned off (a high impedance state).

During the switching element 2000Q2 is turned on, a connection point between the resistances 2000Rc and 2000Rd is in a Low level. Accordingly, a charging electrode of an integral capacitor 2000Ci is discharged via the resistance 2000Rd and the switching element 2000Q2, and thus the voltage Vdim is lowered.

In the case where the switching element 2000Q2 is turned off, the integral capacitor 2000Ci is charged from the controlling power source voltage Vcc via the resistances 2000Rc and 2000Rd, and thus the voltage Vdim rises. Accordingly, the voltage Vdim is increased and decreased on the basis of a ratio of the off/on of the switching element 2000Q2, and the longer the off period of the switching element 2000Q2 is, the more the voltage Vdim is increased.

### (Second example)

In an example of Fig. 11(b), a CR integration circuit is configured by using an incorporated error amplifier EA provided between the first pin (INV) and the second pin (COMP) of the controlling integrated circuit 50 of Fig. 8, and is configured so that a dimming voltage based on the duty of the low-frequency PWM signal can be obtained in the output of the error amplifier EA.

To a +(plus) input terminal of the error amplifier EA, the reference voltage Vref1 is applied in the IC. A parallel circuit of an integration capacitor 2000Ci and a feedback resistance 2000Rf is connected between an output terminal (a second pin) and a -(minus) input terminal (a first pin) of the error amplifier EA. To the -(minus) input terminal (the first pin) of the error amplifier EA, the low-frequency PWM signal is inputted via the input resistance 2000Ri. It is preferred that time constants of: the integral capacitor 2000Ci, the feedback resistance 2000Rf, and the input resistance 2000Ri are designed so as to be a direct-current voltage obtained by approximately smoothing the voltage of the output terminal (the second pin) of the error amplifier EA.

When a period where the low-frequency PWM signal is in a Low level becomes long, the voltage of the output terminal (the second pin) of the error amplifier EA is increased, and accordingly the control is carried out so as to be; the longer the period of a Low level is, the larger the dimming output becomes.

### (Third embodiment)

In an example of Fig. 11(c), a series circuit of a resistance 2000R41 and a transistor Tr1 is connected in parallel with the current detection resistance R1 connected to the fourth pin (the chopper current detection terminal CS) of the controlling integrated circuit 50 of Fig. 8. The transistor Tr1 is used in an unsaturated region, and the resistance value is controlled to be variable on the basis of the analog dimming voltage Vdim.

When the analog dimming voltage Vdim becomes high, a base current supplied via a bias resistance 2000R42 to the transistor Tr1 increases, and accordingly the resistance value of the transistor Tr1 is lowered. Then, seen from the controlling integrated circuit 50, since the same effect as that of lowering the resistance value of the current detection resistance R1 can be obtained, the peak value of the current flowing to the switching element Q1 can be increased.

That is, the semiconductor light emitting element 4 can be dimmed by subtracting a correction value based on a target brightening amount of the semiconductor light emitting element 4 from a detection value detected by the current detection resistance R1.

### (Fourth embodiment)

In an example of Fig. 11(d), a circuit for intermittently flowing a superposed current from the seventh pin (the gate drive terminal GD) of the controlling integrated circuit 50 of Fig. 8 to a non-ground side terminal of the current detection resistance R1 is provided. The superposed current flows at timing when the seventh pin (the gate drive terminal GD) becomes a High level, that is, only in a period when the switching element Q1 of Fig. 8 is turned on, and accordingly the power consumption in the current detection resistance R1 can be suppressed in comparison with the case of constantly flowing the superposed current.

In the example shown in the drawing, by making a PNP transistor Tr3 grounded by a collector operate in the emitter-follower manner, an impedance of the analog dimming voltage Vdim is reduced, and when the switching element Q1 is turned on, a current obtained by dividing a voltage difference between the output voltage of the seventh pin and the dimming voltage Vdim by the resistance 2000R44 is supplied to a base of the PNP transistor 2000Tr2. When the analog dimming voltage Vdim is lowered, the base current of the transistor 2000Tr2 is increased, and thus the current superposed to the current detection resistance R1 via the resistance 2000R43 and the diode 2000D7 is increased. In this manner, the peak value of the current flowing to the switching element Q1 can be decreased.

That is, the semiconductor light emitting element 4 can be dimmed by superposing a correction value based on a target dimming amount of the semiconductor light emitting element 4 to the detection value detected by the current detection resistance R1.

Fig. 10 shows an overall configuration of the LED dimming lighting device 1 incorporating the lighting device of Fig. 8. The power source circuit 2 is configured by including the above-mentioned filter circuit 2a and direct-current power source circuit 2b. The capacitors Cc and Cd are capacitors used for connecting a circuit ground (a negative electrode of the capacitor C0) to a fixture chassis in a high-frequency manner. CON1 is a power source connector connected to the commercially-available alternating-current power source Vs, CON2 is the output connector connected to the semiconductor light emitting element 4 via the lead line 44, and CON3 is a connector for connecting the dimming signal line. To the dimming signal line, a dimming signal including a duty-variable rectangular wave voltage signal having 1khz-frequency and 10V-amplitude is supplied.

The rectifier circuit 5a connected to the connector CON3 is a circuit for making a wire of the dimming signal line be non-polarized, is configured to be able to normally operate even if the dimming signal line is inversely connected. That is, the inputted dimming signal is rectified in full-wave by a full-wave rectifier DB1, and thereby the rectangular wave voltage signal is obtained at both ends of the zener diode ZD via an impedance element Z1 such as a resistance. The insulation circuit 5b has a photo coupler PC1, and transfers the rectangular wave voltage signal with insulating the dimming signal line and the lighting device. The waveform shaping circuit 5c is a circuit for: shaping a waveform of a signal outputted from the photo coupler PC1 of the insulating circuit 5b and outputting the signal as the PWM signals clearly distinguishable whether in a High level or in a Low level. Since the rectangular wave voltage signal transferred through a long distance via the dimming signal line has a distorted waveform, the waveform shaping circuit 5c is provided.

In the dimming lighting device of the present invention, the direct-current conversion circuit 5d including the low-pass filter such as the CR integral circuit (the smoothing circuit) is further provided after the waveform shaping circuit 5c, the analog dimming voltage Vdim is generated, and thereby the peak value of the switching element Q1 is controlled to be varied on the basis of the dimming voltage Vdim.

### (First modified example of second embodiment)

In the above-mentioned embodiment 2, the circuit example where the switching element Q1 of the step-down chopper circuit 3 is arranged on a lower potential side has been explained; however, as shown in Fig. 5(a), it is needless to say that the present invention can be also applied to the case where the switching element Q1 of the step-down chopper circuit 3a is arranged on a higher potential side.

In addition, the present invention can be applied to various types of switching power source circuit as shown in Fig. 5(b) to (d). Fig. 5(b) is an example of the step-up chopper circuit 3b, Fig. 5(c) is an example of the flyback converter circuit 3c, and Fig. 5(d) is an example of the step-up/step-down chopper circuit 3d. These are examples, and accordingly if the switching power source circuit is configured to use a combination of: a peak current detection operation for controlling the switching element Q1 to be turned off when the current flowing to the inductance component (the inductor L1 or the transformer T1) at the turning-on of the switching element Q1 reaches a predetermined value; and a zero-cross detection operation for controlling the switching element Q1 to be turned on when the current emitted via the regeneration diode D1 from the inductance component at the turning-off of the switching element Q1 becomes substantially zero, the present invention can be applied to the switching power source circuit.

### (Second modified example of second embodiment)

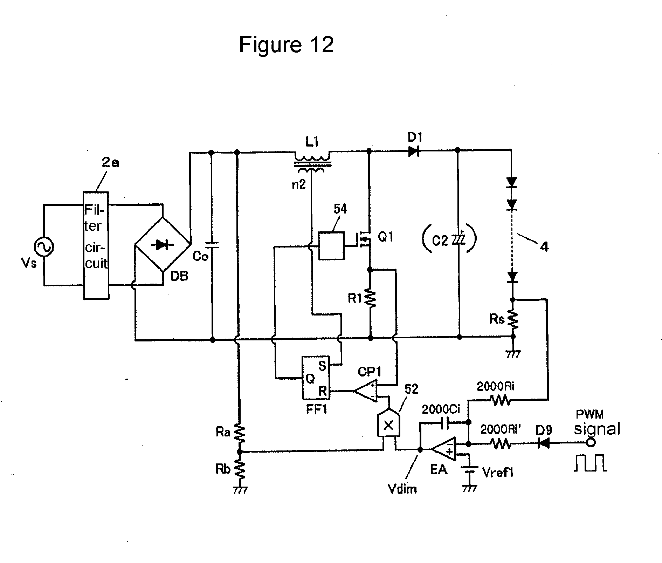

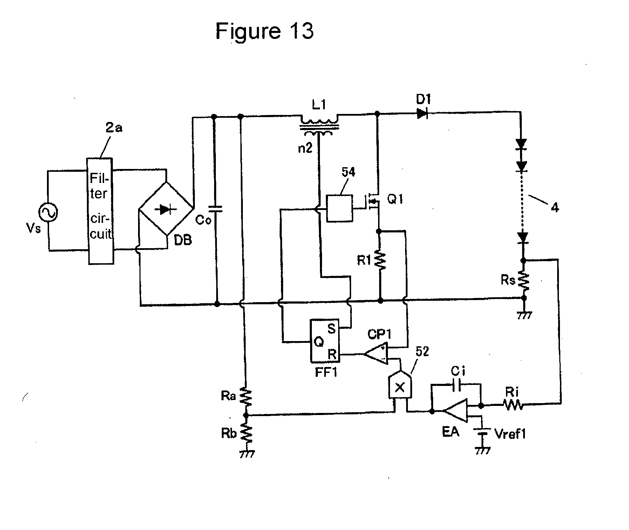

Fig. 12 is a circuit diagram of a lighting device of a second modified example according to the second embodiment of the present invention. According to the present embodiment, in a configuration of the conventional example (Patent literature 1) of Fig. 13, modification so as to obtain the same effect as that obtained when the reference voltage Vref is set to be equivalently variable is carried out without setting the reference voltage Vref1 to be variable by: adding a series circuit of an input resistance 2000Ri' and a diode D9, and carrying out the integration in a direction where the dimming voltage Vdim is lowered when the low-frequency PWM signal is in a High level.

In the configuration of Fig. 13, the Patent literature 3 discloses that the dimming control can be carried out by setting the reference voltage Vref to be variable; however, as described above, in the case where the L6562 manufactured by the ST Microelectronics Corporation is employed as the controlling integrated circuit 50, the reference voltage Vref1 is incorporated in the IC, and accordingly cannot be variably controlled from the outside. Sine the -(minus) input terminal and the output terminal of the error amplifier EA are exposed to the outside of the IC as the first pin and second pin, respectively, the time constants of the integral capacitor 2000Ci and the input resistance 2000Ri' connected between the first and second pins are set to be a capacity at which the low-frequency PWM signal can be smoothed, and when a period where the PWM signal is in a High level becomes long, the control is carried out so that the analog dimming voltage Vdim that is an output voltage of the error amplifier EA can be lowered. In this manner, the same effect as that obtained by lowering the reference voltage Vref1 in the IC can be obtained.

From the other point of view, this obtains the same effect as that obtained by superposing a correction value based on the High level period of the PWM signal to a load current detected by the LED current detection resistance Rs. That is, even if an average value of the load current actually flowing to the semiconductor light emitting element 4 is smaller than the original current value determined by the reference voltage Vref1, the detected average value is inflated by superposing extra an integral current flowing via the input resistance 2000R1' to the High level period of the PWM signal, it is determined that the target current is already achieved, and consequently the dimming is carried out.

The circuit configuration of Fig. 12 will be explained below. The commercially-available alternating-current power source Vs is connected via the filter circuit 2a to the alternating-current input terminal of the diode bridge DB. To, the direct-current output terminal of the diode bridge DB, the capacitor Co having a small capacity for the high-frequency bypass is connected in parallel. The voltage between both ends of the capacitor C0 becomes a pulsating voltage rectified in full-wave, is divided by a voltage-dividing circuit of the resistances Ra and Rb, and is inputted to one of the input terminals of the multiplier circuit 52.

A positive electrode of the direct-current output terminal of the diode bridge DB is connected to the drain electrode of the switching element Q1 and to the anode electrode of the diode D1 via the inductor L1. The source electrode of the switching element Q1 is connected to a negative electrode of the direct-current output terminal of the diode bridge DB via the current detection resistance R1. The negative electrode of the direct-current output terminal of the diode bridge DB is grounded to the circuit ground. The cathode electrode of the diode D1 is connected to the positive electrode of the smoothing capacitor C2, and the negative electrode of the smoothing capacitor C2 is grounded. To both ends of the smoothing capacitor C2, a series circuit of the semiconductor light emitting element 4 and the LED current detection resistance Rs is connected in parallel.

The non-ground side terminal of the LED current detection resistance Rs is connected via the input resistance 2000R1 to the -(minus) input terminal of the error amplifier EA. The integral capacitor 2000Ci is connected in parallel between the -(minus) input terminal and output terminal of the error amplifier EA. The series circuit of the diode D9 and the input resistance 2000Ri' is connected between the -(minus) input terminal of the error amplifier EA and the PWM signal input terminal. The reference voltage Vref1 is applied to the +(plus) input terminal of the error amplifier EA. The voltage Vdim of the output terminal of the error amplifier EA is inputted to the other input terminal of the multiplier circuit 52.

The output voltage of the multiplier circuit 52 is applied to the - (minus) input terminal of the comparator CP1. To the +(plus) input terminal of the comparator CP1, the non-ground side terminal of the current detection resistance 2000R1 for detecting the current of the switching element Q1 is connected. The output terminal of the comparator CP1 is connected to the reset input terminal R of the flip-flop FF1. To the set input terminal S of the flip-flop FF1, the set signal is inputted when the voltage of the secondary winding n2 of the inductor L1 disappears. The Q output of the flip-flop FF1 is supplied as the gate drive signal via the driving circuit 54 to the gate electrode of the switching element Q1.

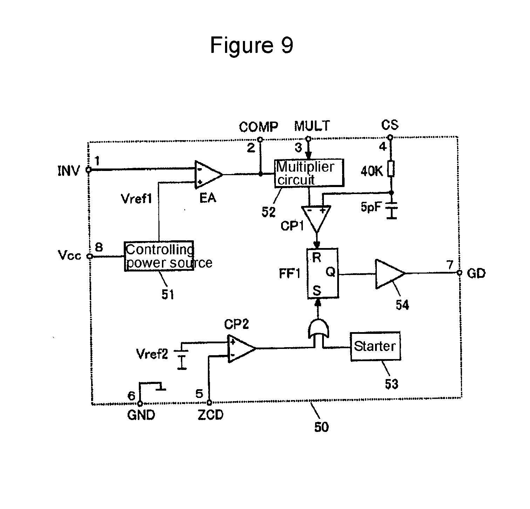

Meanwhile, when a low-cost IC (refer to Fig. 9) configured by integrating the error amplifier EA, the multiplier circuit 52, the comparator CP1, the flip-flop FF1, and the driving circuit 54 in one chip is used, the manufacturing cost can be reduced.

The circuit operation of Fig. 12 will be explained below. When the current of the inductor L1 finishes flowing, the flip-flop FF1 is set in response to the disappearing of the output voltage of the secondary winding n2. When the flip-flop FF1 is set, a gate drive signal is supplied by the Q output to the switching element Q1 via the driving circuit 54, and thus the switching element Q1 is turned on. When the switching element Q1 is turned on, the input current is drawn in a path from the positive electrode of the direct-current output terminal of the diode bridge DB, to: the inductor L1, the switching element Q1, the current detection resistance R1, and then the negative electrode of the direct-current output terminal of the diode bridge DB, and the current flowing to the inductor L1 linearly rises.

The current flowing to the inductor L1 is detected by the current detection resistance R1, and is inputted as the detection voltage to the +(plus) input terminal of the comparator CP1. The output voltage of the multiplier circuit 52 is inputted as the reference voltage to the -(minus) input terminal of the comparator CP1; when the detection voltage of the +(plus) input terminal exceeds the reference voltage of the -(minus) input terminal, the output of the comparator CP1 becomes a High level, and the flip-flop FF1 is reset. Then, the Q output of the flip-flop FF1 becomes a Low level, the gate drive signal from the driving circuit 54 becomes a Low level, and accordingly the switching element Q1 is turned off.

When the switching element Q1 is turned off, a counter electromotive force is generated at both ends of the inductor L1, the counter electromotive force is superposed to the output voltage of the diode bridge DB1, and the stepped-up voltage is charged to the smoothing capacitor C2 via the diode D1. On this occasion, the current flowing to the inductor L1 becomes a linearly-reducing current, and is drawn as the input current from the commercially-available alternating-current power source. During the regeneration current flows to the inductor L1, an electromotive force is generated in the secondary winding n2. When the regeneration current of the inductor L1 finishes flowing, the voltage of the secondary winding n2 disappears, and at the timing, the flip-flop FF1 is set again. The same operations are repeated below.

In this circuit, the down period of the input current is not generated, and accordingly the input power factor becomes high. In addition, since the peak value of the input current is regulated by the output voltage of the multiplier circuit 52, an envelope line of the input current will be proportional to the pulsating voltage obtained by rectifying the commercially-available alternating-current voltage in full-wave, the input current and the input voltage will be substantially directly proportional to each other by removing the high-frequency components of the input current with the filter circuit 2a, and thus the harmonic distortion of the input current is reduced.

The other input voltage of the multiplier circuit 52 is the dimming voltage Vdim as the output voltage of the error amplifier EA. The dimming voltage Vdim is controlled so that a difference between; the average value of the load current of the semiconductor light emitting element 4, the load current being detected by the LED current detection resistance Rs; and the reference voltage Vref1 can be small. That is, in the case where the average value of the load current of the semiconductor light emitting element 4, the load current being detected by the LED current detection resistance Rs is smaller than a target value, the dimming voltage Vdim becomes large, and the control is carried out so that the peak value of the current flowing to the switching element Q1 can be increased. On the contrary, in the case where the average value of the load current of the semiconductor light emitting element 4, the load current being detected by the LED current detection resistance Rs, is larger than the target value, the dimming voltage Vdim becomes small, and the control is carried out so that the peak value of the current flowing to the switching element Q1 can be decreased. In this manner, even when the power source voltage is varied and the temperature is varied, the average value of the load current of the semiconductor light emitting element 4, the load current being detected by the LED current detection resistance Rs, is controlled in the feedback manner so as to converge to the target value.

However, in the circuit of Fig. 12, since the PWM signal is added to the input of the integral circuit via the series circuit of the input resistance 2000Ri' and the diode D9, when the average value of the PWM signal (that is the on-duty) becomes large, the circuit operates as if the average value of the load current is increased, and if the average value of the actual load current is lower than the target value, the feedback control becomes stable at the operating point. Accordingly, the dimming control can be carried our so that the average value of the load current can be small as the on-duty of the PWM signal becomes large.

Meanwhile, the load current detected by the LED current detection resistance Rs is smoothed by an integral circuit including the resistance 2000Ri and the capacitor 2000Ci, and accordingly, the operation can be carried out without the smoothing capacitor C2 as described in Patent literature 1. As shown in Fig. 12, in the case where the smoothing capacitor C2 is used, there is an advantage that the peak current flowing to the semiconductor light emitting element 4 can be reduced and that a photo output having little high-frequency ripples can be obtained, and accordingly the smoothing capacitor C2 will be used in many case.

In the present embodiment, the case of the step-up chopper circuit shown in Fig. 5(b) has been explained; however, the same control as that of the present embodiment may be applied to the configurations of Fig. 8 and Figs. 5(a), 5(b), and 5(c).

### (Third embodiment)

The LED lighting device of the second embodiment and the modified examples can be configured as the LED illumination fixture separately having power source shown in Fig. 6 in the same manner as that of the first embodiment. The details are omitted.

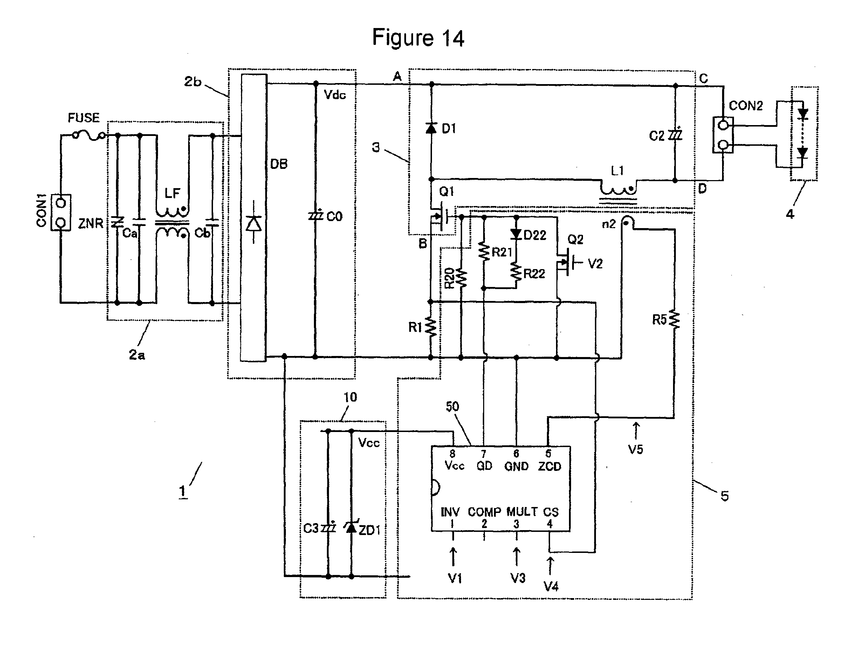

Fig. 14 is a circuit diagram of a lighting device according to a third embodiment of the present invention. The lighting device has the power source connector CON1 and the output connector CON2. To the power source connector CON1, the commercially-available alternating current power source (100V, 50/60Hz) is connected. To the output connector CON2, the semiconductor light emitting element 4 such as a light emitting diode (LED) is connected. The semiconductor light emitting element 4 may be an LED module configured by connecting a plurality of LEDs in series, in parallel, or in series and parallel.

To the power source connector CON1, a rectifying smoothing circuit 2b is connected via the current fuse FUSE and the filter circuit 2a. The filter circuit 2a includes: the surge voltage absorbing element ZNR, the filter capacitors Ca and Cb, and the common mode chalk coil LF. Although the rectifying smoothing circuit 2b is shown as a circuit including: the full-wave rectifier DB and the smoothing capacitor C0, the rectifying smoothing circuit 2b may be the power factor improving circuit using the step-up chopper circuit.

To an output terminal of the rectifying smoothing circuit 2b, the step-down chopper circuit 3 is connected. The step-down chopper circuit 3 includes: the inductor L1 connected in series to the semiconductor light emitting element 4 lighted by the direct current electricity; the switching element Q1 connected in series between: a series circuit of the inductor L1 and the semiconductor light emitting element 4, and an output of the rectifying smoothing circuit 2b; and a regeneration diode D1 connected in parallel to the series circuit of the inductor L1 and the semiconductor light emitting element 4 and connected in a direction to emit accumulated energy of the inductor L1 to the semiconductor light emitting element 4 when the switching element Q1 is turned off. In addition, the output capacitor C2 is connected in parallel with the semiconductor light emitting element 4. A capacity of the output capacitor C2 is set so that pulsation components caused by the turning on and off of the switching element Q1 can be smoothed and that the smoothed direct-current electricity can flow to the semiconductor light emitting element 4.

The switching element Q1 is driven at a high-frequency wave to be turned on and off by the control circuit 5. The control circuit 5 includes: the controlling integrated circuit 50 and the periphery circuits. As the controlling integrated circuit 50, the L6562 manufactured by the ST Microelectronics Corporation is employed in the same manner as those of the first and second embodiment, and since being the same as those explained for Fig. 2 of the first embodiment, the details will be omitted. Different configurations from the first and second embodiments will be explained below.

### <Dimming Operation>

According to a configuration of the present embodiment, the average value of the chopper current changes little even when a load is different. Accordingly, an effective value of the output current supplied to the load by smoothing the pulsating components of the chopper current with the output capacitor C2 will be substantially constant regardless of the load.

Then, when the high-frequency chopper operation is intermittently stopped in accordance with the low-frequency PWM signal, the output current depending on the duty of the PWM signal can be supplied to the semiconductor light emitting element 4, and thereby the dimming with high precision can be realized. For this purpose, in the embodiment of Fig. 14, the switching element Q2 is connected between: the controlling electrode of the switching element Q2, and the ground to control the gate voltage V2 of the switching element Q2 in accordance with the low-frequency PWM signal (a first dimming operation).

In addition, when the peak value of the current flowing to the switch Q1 is changed, the average value of the chopper current is constantly a half(1/2) of the peak value of the current flowing to the switching element Q1, and accordingly the dimming with high precision can be realized. For this purpose, in the embodiment of Fig. 14, the applied voltage V1 of the first pin (INV) of the controlling integrated circuit 50 or the applied voltage V3 of the third pin (MULT) can be controlled (a second dimming operation).

### <Details of First Dimming Operation>

At first, the first dimming operation for controlling the switching element Q2 to be turned on/off in accordance with the low-frequency PWM signal will be explained. The low-frequency PWM signal is a rectangular wave voltage signal of, for example, 1kHz, and is a dimming signal; the longer a period of a Low level in one cycle is, the larger the dimming output becomes. The type of PWM signal is widely used in a field of the dimming lighting device for a fluorescent light, and is, as shown in Fig. 10, supplied from a dimming signal line via the connector CON3 of the lighting device 1 and inputted to the controlling circuit 5 via the rectifier circuit 5a, the insulation circuit 5b, the waveform shaping circuit 5c, and the signal conversion circuit 5d.

In the circuit of Fig. 14, the low-frequency PWM signal outputted from the signal conversion circuit 5d of Fig. 10 is the gate voltage V2 of the switching element Q2, and when the gate voltage V2 is in a High level, the switching element Q2 is turned on to short between: the controlling electrode of the switching element Q1 and the ground. In addition, when the gate voltage V2 is in a Low level, the switching element Q2 is turned off (a high impedance state) to be in the same state as non-connected state.

During the switching element Q2 is turned on, a connecting point between the resistance R21 and the switching element Q2 is constantly in a Low level. Accordingly, even when the seventh pin (the gate drive terminal GD) of the controlling integrated circuit 50 is switched to the High/Low by the high-frequency wave, the gate drive output is consumed by the resistance R21, and thereby the switching element Q1 is maintained in the off-state.

Additionally, in the case where the switching element Q2 is turned off, since the switching element Q1 is switched to be on/off in accordance with the switching at the high-frequency wave of the seventh pin (the gate drive terminal GD) of the controlling integrated circuit 50, the chopper operation will be in a normal state.

Hence, a ratio between the chopper operation period and the chopper operation stopping period coincides with a ratio between the Low level period and the High level period of the PWM signal. A constant current is supplied in the chopper operation period and a current supply is stopped in the chopper operation stopping period, and consequently an electric current depending on a ratio of the Low level period to one cycle of the PWM signal is supplied to the semiconductor light emitting element 4. In this manner, the dimming with high precision can be realized.

In addition, instead of the above-mentioned on-off control of the switching element Q2 or with the control, the oscillating operation of the controlling integrated circuit 50 may be controlled to be intermittently stopped by shorting the fifth pin (ZCD) of the controlling integrated circuit 50 to the ground in synchronization with the low-frequency PWM signal. As described above, in the case where the L6562 manufactured by the ST Microelectronics Corporation is employed as the controlling integrated circuit 50, the disable circuit 55 is connected to the fifth pin (ZCD) as the zero-cross detection terminal as shown in Fig. 2, and accordingly when the fifth pin is shorted to the ground, the operation of the IC can be stopped. Then, when the low-frequency PWM signal is in a High level, the fifth pin (ZCD) is shorted to the ground to stop the operation of the IC, and when the low-frequency PWM signal is in a Low level, the fifth pin (ZCD) is opened to return the operation to the normal operation. In this manner, the dimming can be carried out on the basis of the ratio between the Low level period and the High level period of the low-frequency PWM signal.

In the signal conversion circuit 5d of Fig. 10, the PWM signal supplied from the dimming signal line may be outputted after being converted into a second PWM signal having a different pulse width, and may be outputted in the original pulse width. Additionally, in the signal conversion circuit 5d, the analog dimming voltage Vdim varying on the basis of the pulse width of the PWM signal supplied from the dimming signal line is outputted. The dimming voltage Vdim is used in the second dimming operation.
Next, the second dimming operation will be explained.

### <Details of Second Dimming Operation>

In the present embodiment, the applied voltage V1 of the first pin (INV) or the applied voltage V3 of the third pin (MULT) of the controlling integrated circuit 50 can be controlled on the basis of the analog dimming voltage Vdim outputted from the signal conversion circuit 5d. In this manner, since the peak value of the current flowing to the switching element Q1 can be varied, the dimming can be carried out.

When the peak value of the current flowing to the switching element Q1 is increased, the on-off frequency of the switching element Q1 becomes low, and on the contrary, when the peak value is decreased, the on-off frequency of the switching element Q1 becomes high. Because a slope of a gradually-increasing current flowing to the inductor L1 when the switching element Q1 is turned on and a slope of a gradually-reducing current flowing to the inductor L1 when the switching element Q1 is turned off are constant if the power source voltage Vdc is equal to the load voltage Vc2. That is, even when the peak value of the current flowing to the switching element Q1 is increased and decreased, the chops formed by the gradually-increasing current and the gradually-reducing current flowing to the inductor L1 maintain the similarity shape, and thus a proportional relation between the on-off cycle of the switching element Q1 and the peak value of the current flowing to the switching element Q1 can be maintained.

Accordingly, in order to restrict the on-off frequency of the switching element Q1 to be the predetermined maximum frequency fmax or less, it is required to restrict the peak value of the current flowing to the switching element Q1 to be the predetermined minimum value Imin or more. Additionally, in order to restrict the on-off frequency of the switching element Q1 to be the predetermined minimum frequency fmin or more, it is required to restrict the peak value of the current flowing to the switching element Q1 to be the predetermined minimum value Imax or less.

In this manner, the operation to restrict the peak value of the current flowing to the switching element Q1 within a range from the predetermined minimum value Imin to the predetermined maximum value Imax can be realized by restricting a voltage range of the analog dimming voltage Vdim outputted from the signal conversion circuit 5d.

### <Combination of First Dimming Operation and Second Dimming Operation>

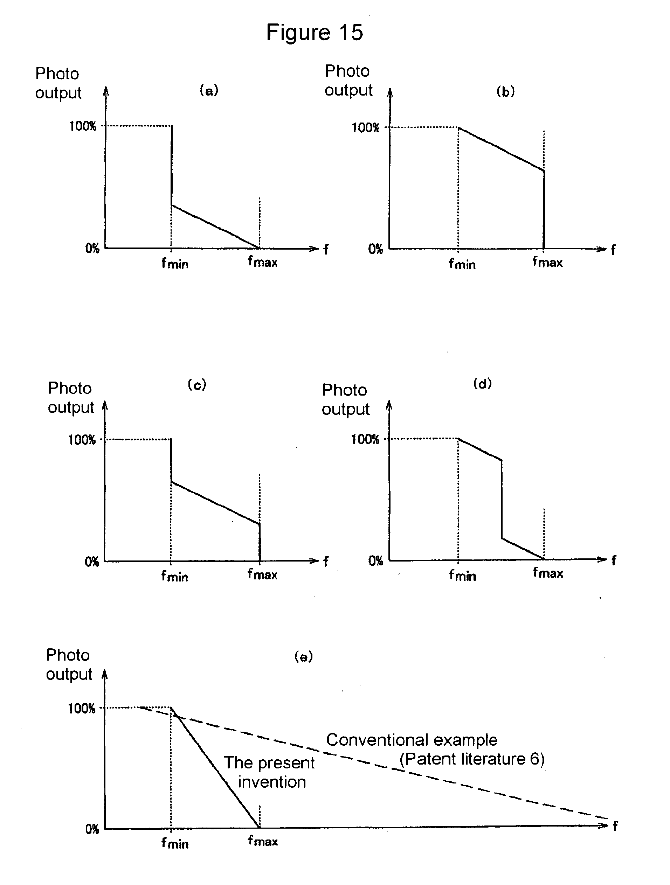

The signal conversion circuit 5d of Fig. 10 includes, for example, a micro computer, reads the pulse width of the PWM signal outputted from the waveform shaping circuit 5c, and after converting the pulse width into a digital value, in order to realize the various types of dimming operations exemplified in Figs. 15(a) to 15(e), the analog dimming voltage Vdim is generated and the second PWM signal having a converted pulse width is outputted.

In the example of Fig. 15(a), the photo output is reduced only by the first dimming operation to intermittently stop the on-off operation of the switching element Q1 in a process where the photo output is lowered from 100% to a predetermined dimming output (for example, photo output 30%). In addition, on a lower brightness side than the predetermined dimming output, the photo output is reduced only by the second dimming operation to reduce the peak value of the current flowing to the switching element Q1, or the photo output is reduced by using the second dimming operation and the first dimming operation in combination.

In the dimming control, there is an advantage that the smooth dimming can be carried out especially on the low brightness side. Only using the first dimming operation to intermittently stop the on-off operation of the switching element Q1 is used, when a period of the intermittent oscillation is short, the number of on-pulses of the switching element Q1 included in the intermittent oscillation period becomes small, for example, one to a few pulses, the variation of the photo output with respect to the change of the intermittent oscillation sometimes is discrete. On this occasion, when the on-off frequency of the switching element Q1 is raised by reducing the peak value of the current flowing to the switching element Q1, the on-pulse number of the switching element Q1 included in the intermittent oscillation period can be increased, and accordingly the variation of the photo output can be prevented from being discrete with respect to the change of the intermittent oscillation period. In addition, since the peak value of the current flowing to the switching element Q1 can be continuously changed, the effective value of the load current can be continuously changed, and thus the smooth dimming can be carried out especially on the low brightness side.

In the example of Fig. 15(b), in a process where the photo output is lowered from 100% to a predetermined dimming output (for example, photo output 70%), the photo output is reduced only by the second dimming operation to reduce the peak value of the current flowing to the switching element Q1, or the photo output is reduced by using the second dimming operation and the first dimming operation in combination. In addition, on a lower brightness side than the predetermined dimming output, the photo output is reduced only by the first dimming operation to intermittently stop the on-off operation of the switching element Q1.

According to the dimming control, since the dimming control on the low brightness side by the first dimming operation to intermittently stop the on-off operation of the switching element Q1 is carried out at the maximum frequency fmax, the number of on-pulses of the switching element Q1 included in the intermittent oscillation period becomes the maximum, and accordingly there is an effect that the variation of the photo output is smoothed with respect to the change of the length of the intermittent oscillation period.

The example of Fig. 15(c) is a combination of the controls of Figs. 15(a) and 15(b), and in the process where the photo output is lowered from 100% to the first dimming output (for example, photo output 70%), the photo output is reduced only by the first dimming operation to intermittently stop the on-off operation of the switching element Q1. Additionally, in the process where the photo output is lowered from the first dimming output to the second dimming output (for example, photo output 30%), the photo output is reduced only by the second dimming operation to reduce the peak value of the current flowing to the switching element Q1, or the photo output is reduced by using the second dimming operation and the first dimming operation in combination. Moreover, the photo output is reduced only by the first dimming operation to intermittently stop the on-off operation of the switching element Q1 on the lower brightness side than the second dimming output.

The example of Fig. 15(d) is also a combination of the controls of Figs. 15(a) and 15(b); in the process where the photo output is lowered from 100% to the first dimming output (for example, photo output 80%), the photo output is reduced only by the second dimming operation to reduce the peak value of the current flowing to the switching element Q1, or the photo output is reduced by using the second dimming operation and the first dimming operation in combination. Additionally, in the process where the photo output is lowered from the first dimming output to the second dimming output (for example, photo output 20%), the photo output is reduced only by the first dimming operation to intermittently stop the on-off operation of the switching element Q1. Moreover, on the lower brightness side than the second dimming output, the photo output is reduced only by the second dimming operation to reduce the peak voltage of the current flowing to the switching element Q1, or the photo output is reduced by using the second dimming operation and the first dimming operation in combination.

The example of Fig. 15(e) controls the photo output by constantly combining the first dimming operation to intermittently stop the on-off operation of the switching element Q1 and the second dimming operation to reduce the peak voltage of the current flowing to the switching element Q1.

When the photo output is 100%, the on-off frequency f of the switching element Q1 becomes the minimum frequency fmin, and the peak value of the current flowing to the switching element Q1 becomes the maximum. Additionally, in the stopping period of the on-off operation of the switching element Q1, the peak value becomes the minimum. Meanwhile, when the photo output is the lowest, the on-off frequency f of the switching element Q1 becomes the maximum frequency fmax, and the peak value of the current flowing to the switching element Q1 becomes the lowest. Additionally, in the stopping period of the on-off operation of the switching element Q1, the peak value becomes the maximum. In this manner, even when the photo output is varied in a broad range as shown by a solid line of Fig. 15(e), the on-off frequency f of the switching element Q1 is restricted in a range from the predetermined minimum frequency fmin to the maximum frequency fmax.

Compared to this, the characteristic shown by a broken line of Fig. 15(e) shows that when the photo output is increased and decreased only by the second dimming operation to increase and decrease the peak value of the current flowing to the switching element Q1, the on-off frequency f of the switching element Q1 varies in a broad range (a fault of Patent literature 3). Since the effective value (the average value) of the load current is proportional to the peak value of the current flowing to the switching element Q1, in order to control the photo output to be variable, for example, in a range from 100% to 1% with only use of the second dimming operation, the peak value of the current flowing to the switching element Q1 has to be changed in a range of 100:1. On this occasion, since the on-off frequency of the switching element Q1 varies in a range of 1:100, a ratio between the minimum frequency and the maximum frequency becomes hundredfold and accordingly is not practical.

However, in order to restrict the ratio between the minimum frequency fmin and the maximum frequency fmax to be, for example, 1:2, a dimming ratio is from 100% to 50%, and also is not practical.

Then, not only the peak value of the current flowing to the switching element Q1 is controlled, but also the control to intermittently stop the on-off operation of the switching element Q1 at the low-frequency and to vary the length of the stopping period is combined with. In this manner, as shown by the solid line (the present invention) of Fig. 15(e), the photo output is controllable in a broad range, and additionally the on-off frequency f of the switching element Q1 can be restricted in a range between the predetermined maximum frequency fmax and the predetermined minimum frequency fmin.

Meanwhile, the high-frequency components in the range between the predetermined maximum frequency fmax and the predetermined minimum frequency fmin can be suppressed by the filter circuit 2a to be a noise regulation level or less, the noise regulation level being regulated in the CISPR and the like.

The overall configuration of the LED dimming lighting device 1 incorporating the lighting device of Fig. 14 is the same as that shown in Fig. 10. The power source circuit 2 is configured by including the above-mentioned filter circuit 2a and the rectifying smoothing circuit 2b. The capacitors Cc and Cd are capacitors used for connecting the circuit ground (the negative electrode of the capacitor C0) to the fixture chassis in the high-frequency manner. CON1 is the power source connector connected to the commercially-available alternating-current power source Vs, CON2 is the output connector connected to the semiconductor light emitting element 4 via the lead line 44, and CON3 is a connector for connecting the dimming signal line. To the dimming signal line, a dimming signal including a duty-variable rectangular wave voltage signal having 1kHz-frequency and 10V-amplitude is supplied.

The rectifier circuit 5a connected to the connector CON3 is a circuit for making a wire of the dimming signal line be non-polarized, is configured to be able to normally operate even if the dimming signal line is inversely connected. That is, the inputted dimming signal is rectified in full-wave by the full-wave rectifier DB1, and thereby the rectangular wave voltage signal is obtained at both ends of the zener diode ZD via the impedance element Z1 such as a resistance. The insulation circuit 5b has the photo coupler PC1, and transfers the rectangular wave voltage signal with insulating the dimming signal line and the lighting device. The waveform shaping circuit 5c is a circuit for: shaping a waveform of a signal outputted from the photo coupler PC1 of the insulating circuit 5b and outputting the signal as the PWM signals clearly distinguishable whether in a High level or in a Low level. Since the rectangular wave voltage signal transferred through a long distance via the dimming signal line has a distorted waveform, the waveform shaping circuit 5c is provided.

In the dimming lighting device of the present invention, the signal conversion circuit 5d including the microcomputer and the like is further provided after the waveform shaping circuit 5c, the analog dimming voltage Vdim is generated, and thereby the current peak value of the switching element Q1 is controlled to be varied on the basis of the dimming voltage Vdim. In addition, the second PWM signal having a different pulse width than that of the inputted dimming signal is generated, and the period when the on-off operation of the switching element Q1 is intermittently stopped on the basis of the converted pulse width of the PWM signal is controlled to be varied.

Meanwhile, the signal conversion circuit 5d is not limited to the microcomputer, and may include: a monostable multi-vibrator for converting the pulse width, a CR smoothing circuit for generating the dimming voltage Vdim, and the like. In addition, it is not necessarily required to convert the pulse width of the PWM signal with use of the signal conversion circuit 5d, and it is allowed to make the PWM signal directly pass and only to generate the dimming voltage Vdim based on the pulse width.

### (First modified example of third embodiment)

In the above-mentioned third embodiment, in order to realize the second dimming operation to change the peak value of the current flowing to the switching element Q1, the applied voltage V1 of the first pin (INV) or the applied voltage V3 of the third pin (MULT) of the controlling integrated circuit 50 are controlled on the basis of the analog dimming voltage Vdim outputted from the signal conversion circuit 5d; however, in the first modified example of the third embodiment, as another means to realize the second dimming operation, the peak value of the current flowing to the switching element Q1 is changed by adding and subtracting a correction value based on the dimming voltage Vdim to and from the applied voltage V4 of the fourth pin (CS) of the controlling integrated circuit 50 of Fig. 14. Other configurations and operations may be the same as those of the third embodiment.

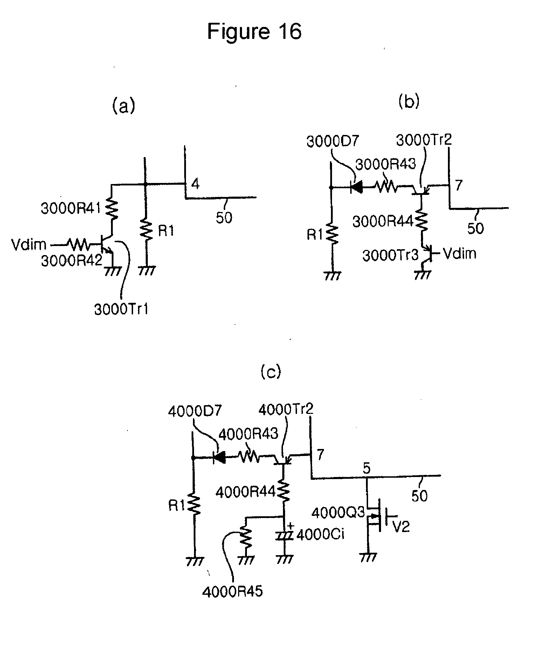

In the example of Fig. 16(a), a series circuit of a resistance 3000R41 and the transistor 3000Tr1 is connected in parallel with the current detection resistance R1 connected to the fourth pin (the chopper current detection terminal CS) of the controlling integrated circuit 50 of Fig. 14. The transistor 3000Tr1 is used in an unsaturated region, and the resistance value is variably controlled on the basis of the analog dimming voltage Vdim.

When the analog dimming voltage Vdim becomes high, the base current supplied via the bias resistance 3000R42 to the transistor 3000Tr1 is increased, and accordingly the resistance value of the transistor 3000Tr1 is lowered. Then, seen from the controlling integrated circuit 50, since the same effect as that obtained by reduction of the resistance value of the current detection resistance R1 can be obtained, the peak value of the current flowing to the switching element Q1 can be increased.

That is, the semiconductor light emitting element 4 can be dimmed by subtracting the correction value based on a target brightness amount of the semiconductor light emitting element 4 from the detection value detected by the current detection resistance R1.

### (First modified example of third embodiment)

In the example of Fig. 16(b), a circuit for intermittently flowing a superposed current from the seventh pin (the gate drive terminal GD) of the controlling integrated circuit 50 of Fig. 14 to a non-ground side terminal of the current detection resistance R1 is provided. The superposed current flows at timing when the seventh pin (the gate drive terminal GD) becomes a High level, that is, only in a period when the switching element Q1 of Fig. 14 is turned on, and accordingly the power consumption in the current detection resistance R1 can be suppressed in comparison with the case of constantly flowing the superposed current.

In the example shown in the drawing, by making a PNP transistor 3000Tr3 grounded by a collector operate in the emitter-follower manner, an impedance of the analog dimming voltage Vdim is reduced, and when the switching element Q1 is turned on, a current obtained by dividing a voltage difference between the output voltage of the seventh pin and the dimming voltage Vdim by the resistance 3000R44 is supplied to a base of the PNP transistor 3000Tr2. When the analog dimming voltage Vdim is lowered, the base current of the transistor 3000Tr2 is increased, and thus the current superposed to the current detection resistance R1 via the resistance 3000R43 and the diode 3000D7 is increased. In this manner, the peak value of the current flowing to the switching element Q1 can be decreased.

That is, the semiconductor light emitting element 4 can be dimmed by superposing the correction value based on the target brightness amount of the semiconductor light emitting element 4 to the detection value detected by the current detection resistance R1.

### (Third example)

In the example of Fig. 16(c), the dimming voltage Vdim is generated in oneself by integrating the gate drive signal from the seventh pin (the gate drive terminal GD) of the controlling integrated circuit 50 of Fig. 14 with use of a smoothing circuit including: the resistances 3000R44 and 3000R45 and the capacitor 3000C1. Specifically, in the present embodiment, since the smoothing circuit including: the resistances 3000R44 and 3000R45; and the capacitor 3000C1 serves as the signal conversion circuit for generating the direct-current voltage based on the High level period of the PWM signal, the signal conversion circuit 5d is not required, and the PWM signal outputted from the waveform shaping circuit 5c is directly used as the driving voltage V2 of the switching element Q2 of Fig. 14. Moreover, in the period when the PWM signal outputted from the waveform shaping circuit 5c is in a High level, the fifth pin of the controlling integrated circuit 50 is shorted to the ground to stop the oscillating operation of the controlling integrated circuit 50.

As described above, in the case where the L6562 manufactured by the ST Microelectronics Corporation is employed as the controlling integrated circuit 50, the disable circuit 55 is connected to the fifth pin (ZCD) serving as the zero-cross detection terminal as shown in Fig. 2, and when the fifth pin is shorted to the ground, the operation of the IC can be stopped. Then, when the low-frequency PWM signal (the gate voltage V2 of the switching element Q2 of Fig. 14) is in a High level, the switching element 3000Q3 of Fig. 16(c) is turned on, the operation of the IC is stopped by shorting the fifth pin (ZCD) to the ground, and thereby the configuration not to output the gate drive signal from the gate drive terminal GD (the seventh pin) is realized. The time constants of the resistances 3000R44 and 3000R45 and the capacitor 3000Ci are set so that the charging voltage of the capacitor 3000Ci can be controlled on the basis of the effective value of the gate drive signal.

The circuit configuration is simple, which is configured by: connecting the series circuit of the capacitor 3000Ci to which the discharging resistance 3000R45 is connected in parallel and the charging resistance 3000R44 between the base of the transistor 3000Tr2 and the ground; connecting the emitter of the transistor 3000Tr2 to the gate drive terminal GD (the seventh pin) of the controlling integrated circuit 50; and connecting a corrector to the non-ground side terminal of the current detection resistance R1 via the series circuit of the resistance 3000R43 and the diode 3000D7.

When the period of a High level of the low-frequency PWM signal becomes long, a period where the gate drive signal is outputted from the gate drive terminal GD (the seventh pin) of the controlling integrated circuit 50 becomes short, and accordingly the charging voltage of the capacitor 3000Ci is lowered. Then, the base current of the transistor 3000Tr2 is increased when the switching element Q1 is turned on, and accordingly the current superposed via the resistance 3000R43 and the diode 3000D7 to the current detection resistance R1 is increased. Hence, the period when the switching element Q1 is turned on becomes short, and thus the peak current is decreased.

On the contrary, when the High level period of the low-frequency PWM signal is short, the period when the gate drive signal is outputted from the gate drive terminal GD (the seventh pin) of the controlling integrated circuit 50 becomes long, and accordingly the charging voltage of the capacitor 3000 Ci becomes high. Then, since the base current of the transistor 3000Tr2 is decreased at the turning-on of the switching element Q1, the current superposed to the current detection resistance R1 via the resistance 3000R43 and the diode 3000D7 is decreased. Accordingly, the on-period of the switching element Q1 becomes long, and the peak current is increased.

According to the first modified example of the third embodiment, the dimming operation shown in Fig. 15(a) or 15(b) can be realized in the simple circuit configuration. In addition, as the side function and effect, a function of soft starting in which the photo output is gradually increased during the capacitor 3000Ci is charged at the turning-on of the power source also can be carried out.

### (Second modified example of third embodiment)

In the above-mentioned third embodiment and the first modified example, the circuit example where the switching element Q1 of the step-down chopper circuit 3 is arranged on the lower potential side has been explained; however, as shown in Fig. 5(a), it is needless to say that the present invention can be also applied to the case where the switching element Q1 of the step-down chopper circuit 3a is arranged on a higher potential side.

In addition, the present invention of the above-mentioned embodiment 3 and the modified examples can be applied to various types of the switching power source circuit as shown in Fig. 5(b) to (d). Fig. 5(b) is an example of the step-up chopper circuit 3b, Fig. 5(c) is an example of the flyback converter circuit 3c, and Fig. 5(d) is an example of the step-up/step-down chopper circuit 3d. These are examples, and accordingly if the switching power source circuit is configured to use a combination of: a peak current detection operation for controlling the switching element Q1 to be turned off when the current flowing to the inductance component (the inductor L1 or the transformer T1) at the turning-on of the switching element Q1; and a zero-cross detection operation for controlling the switching element Q1 to be turned on when the current emitted via the regeneration diode D1 from the inductance component at the turning-off of the switching element Q1 becomes substantially zero, the present invention can be applied to the switching power source circuit.

The LED lighting devices of the third embodiment and the modified examples can be configured as the LED illumination fixture separately having a power source in the same manner as those of the first and second embodiments, and the details are redundant with the above-mentioned explanation of Fig. 6 and are accordingly omitted.

### (Fourth embodiment)

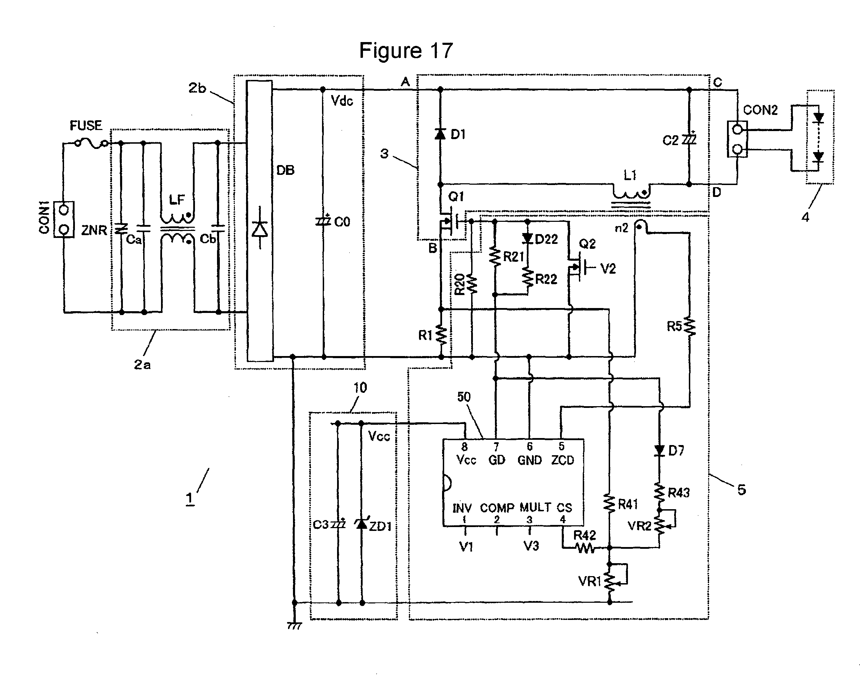

Fig. 17 shows a circuit diagram of a lighting device according to a fourth embodiment of the present invention. The lighting device includes the power source connector CON1 and the output connector CON2. To the power source connector CON1, the commercially-available alternating-current power source (100V, 50/60Hz) is connected. To the output connector CON2, the semiconductor light emitting element 4 such as a light emitting diode (LED) is connected. The semiconductor light emitting element 4 may be an LED module configured by connecting a plurality of LEDs in series, in parallel, or in series and parallel.

To the power source connector CON1, the rectifying smoothing circuit 2b is connected via the current fuse FUSE and the filter circuit 2a. The filter circuit 2a includes: the surge voltage absorbing element ZNR, the filter capacitors Ca and Cb, and the common mode chalk coil LF. Although, the circuit as the rectifying smoothing circuit 2b including: the full-wave rectifier DB and the smoothing capacitor C0 is shown here, the direct-current circuit 2b may be a power factor improving circuit using a step-up chopper circuit.

To an output terminal of the rectifying smoothing circuit 2b, the step-down chopper circuit 3 is connected. The step-down chopper circuit 3 includes: the inductor L1 connected in series to the semiconductor light emitting element 4 lighted by the direct current electricity; the switching element Q1 connected in series between: the series circuit of the inductor L1 and the semiconductor light emitting element 4, and an output of the direct-current power source circuit 2b; and the regeneration diode D1 connected in parallel to the series circuit of the inductor L1 and the semiconductor light emitting element 4 and connected in a direction to emit accumulated energy of the inductor L1 to the semiconductor light emitting element 4 when the switching element Q1 is turned off. In addition, the output capacitor C2 is connected in parallel with the semiconductor light emitting element 4. A capacity of the output capacitor C2 is set so that pulsation components caused by the turning on and off of the switching element Q1 can be smoothed and that the smoothed direct-current electricity can flow to the semiconductor light emitting element 4.

The switching element Q1 is driven at a high-frequency wave to be turned on and off by the control circuit 5. The control circuit 5 includes: the controlling integrated circuit 50 and the periphery circuits. As the controlling integrated circuit 50, the L6562 manufactured by the ST Microelectronics Corporation is employed here in the same manners of the first to third embodiments. The details are the same as the explanation related to Fig. 2 and are accordingly omitted, and different configurations will be mainly explained below.

As shown in Fig. 17, to the fourth pin (CS) of the controlling integrated circuit 50, the detection voltage of the current detection resistance R1 is inputted via the resistances R41 and R42. The variable resistance VR1 for adjusting a current detection sensitivity is preliminarily connected between: a connecting point of the resistances R41 and R42; and the ground. When a resistance value of the variable resistance VR1 is lowered, since the detection voltage of the current detection resistance R1 is divided by the resistance R41 and the variable resistance VR1 and is inputted to the fourth pin (CS), the current detection sensitivity can be lowered, and thereby the peak value of the current flowing to the switching element Q1 can be raised.

In addition, a direct-current electricity is superposed to the variable resistance VR1 from the seventh pin (GD) to supply the gate drive voltage of the switching element Q1 via the diode D7, the resistance R43, and the variable resistance VR2. Since the superposed current via the variable resistance VR2 flows at timing when the seventh pin (the gate drive terminal GD) becomes a High level, that is, only in the period when the switching element Q1 is turned on, the power consumption can be reduced in comparison with the case of constantly flowing the superposed current. When the resistance value of the variable resistance VR2 is lowered, since the superposed direct-current electricity is increased, the voltage of the fourth pin (CS) is increased, and accordingly the peak value of the current flowing to the switching element Q1 can be lowered.

The peak value of the current flowing to the switching element Q1 can be appropriately set by adjusting the two variable resistances VR1 and VR2. Here, the appropriate setting means that: it is appropriate for the upper limit value to be in a range where the inductor L1 is not magnetically saturated and in a range where the upper limit value does not exceed a maximum peak current of the switching element Q1 and for the lower limit value to be in a range where the operation frequency of the switching element Q1 does not become too high.

### <Output Characteristic (Mechanism of Constant Current Control)>

For the output capacitor C2, a direct-current voltage that is stepped down from the output voltage of the capacitor C0 can be obtained. The direct-current voltage is supplied via the output connector CON2 to the semiconductor light emitting element 4. In the case where a light emitting diode (LED) is used as the semiconductor light emitting element 4, when a forward voltage of the LED is Vf and the number of series connections is n, the voltage Vc2 of the output capacitor C2 is clamped approximately at n × Vf.

When the number n of series connections of the LEDs is large, the voltage Vc2 of the output capacitor C2 is high, and accordingly a voltage difference with respect to the voltage Vdc of the capacitor C0 (Vdc - Vc2) becomes small. Accordingly, the voltage separately loaded to the inductor L1 at the turning on of the switching element Q1 becomes small, and thus the rising speed di/dt = (Vdc - Vc2)/L1 of the current i flowing to the inductor L1 becomes slow. As a result, time until the current i flowing to the inductor L1 reaches a predetermined peak value will be long, and accordingly the on-time of the switching element Q1 will be long.

During the switching element Q1 is turned off, a counter electromotive force generated at both ends of the inductor L1 is clamped at the voltage Vc2 (= n × Vf) of the capacitor C2. Accordingly, when the number n of series connections of the LEDs is large, the voltage applied to the inductor L1 at the turning-off of the switching element Q1 becomes large, and thus the attenuating speed di/dt = -Vc2/L1 of the current i flowing to the inductor L1 becomes fast. As a result, time until the current i flowing to the inductor L1 becomes zero will be short, and accordingly the off-time of the switching element Q1 will be short.

On the contrary to the above-mentioned explanation, when the number n of series connection of the LEDs is small, the on-time of the switching element Q1 becomes short and the off-time becomes long. That is, when the number n of series connection of the LEDs is small, the voltage Vc2 of the output capacitor C2 is low, and accordingly the voltage difference with respect to the voltage Vdc of the capacitor C0 (Vdc-Vc2) becomes large. Accordingly, the voltage separately loaded to the inductor L1 at the turning on of the switching element Q1 becomes large, and thus the rising speed di/dt = (Vdc - Vc2)/L1 of the current i flowing to the inductor L1 becomes fast. As a result, time until the current i flowing to the inductor L1 reaches a predetermined peak value will be short, and accordingly the on-time of the switching element Il will be short.

During the switching element Q1 is turned off, the counter electromotive force generated at the both ends of the inductor L1 is clamped at the voltage Vc2 (= n × Vf) of the capacitor C2. Accordingly, when the number n of series connections of the LEDs is small, the voltage applied to the inductor L1 at the turning off of the switching element Q1 becomes small, and thus the attenuating speed di/dt = -Vc2/L1 of the current i flowing to the inductor L1 becomes slow. As a result, time until the current i flowing to the inductor L1 becomes zero will be long, and accordingly the off-time of the switching element Q1 will be long.

As described above, according to the lighting device of the present embodiment, when the number n of series connections of the LEDs is large, the on-time of the switching element Q1 automatically becomes long and the off-time automatically becomes short; and when the number n of series connections of the LEDs is small, the on-time of the switching element Q1 automatically becomes short and the off-time automatically becomes long. Accordingly, regardless of the number n of series connections of the LEDs, a configuration able to maintain the constant current characteristics is achieved.

In addition, a detailed configuration of the controlling power source circuit 10 is not limited; however, the smoothing capacitor C3 and the zener diode ZD1 for regulating the voltage are included here. In a simplest example, a configuration to supply a charging current via a high resistance from the positive electrode of the capacitor C0 to the positive electrode of the capacitor C3 may be employed. As more efficient power source supply means, a configuration so as to constantly charge the capacitor C3 from the secondary wiring n2 of the inductor L1 may be employed.

Additionally, in the fourth embodiment, the timing when the current flowing to the inductor L1 becomes substantially zero is detected by detecting the timing of the voltage disappearing of the secondary wiring n2 of the inductor L1; however, if a means able to detect the timing of disappearing of the regeneration current is employed as another means, for example, detecting of the rising of a counter direction voltage of the regeneration diode D1 and detecting of the stepping down of the voltage between both ends of the switching element Q1, the concrete means may be changed.

### <Dimming Operation>

According to the fourth embodiment, the average value of the chopper current changes very little even if the load is different. Accordingly, regardless of the load, an effective value of the output current supplied to the load by smoothing the pulsation components of the chopper current with use of the output capacitor C2 becomes substantially constant.

Then, the output current based on duties of the PWM signal can be supplied to the semiconductor light emitting element 4 by intermittently stopping the high-frequency chopper operation on the basis of the low-frequency PWM signal, and thereby the dimming with high precision can be realized. For this purpose, in the embodiment of Fig. 17, the switching element Q2 is connected between: the controlling electrode of the switching element Q1 and the ground, and thus the gate voltage V2 of the switching element Q2 is controlled on the basis of the low-frequency PWM signal.

The low-frequency PWM signal is a rectangular wave voltage signal of, for example, 1kHz, and is a dimming signal; the longer a period of a Low level in one cycle is, the larger the dimming output becomes. The type of PWM signal is widely used in a field of the dimming lighting device for a fluorescent light, and is, as shown in Fig. 3, supplied from a dimming signal line via the connector CON3 of the lighting device 1 and inputted to the controlling circuit 5 via the rectifier circuit 5a, the insulation circuit 5b, and the waveform shaping circuit 5c.

In the circuit of Fig. 17, the low-frequency PWM signal outputted from the waveform shaping circuit 5c of Fig. 3 is the gate voltage V2 of the switching element Q2, and when the gate voltage V2 is in a High level, the switching element Q2 is turned on to short between the controlling electrode of the switching element Q1 and the ground. In addition, when the gate voltage V2 is in a Low level, the switching element Q2 is turned off (a high impedance state) to be in the same state as non-connected state.

During the switching element Q2 is turned on, a connecting point between the resistance R21 and the switching element Q2 is constantly in a Low level. Accordingly, even when the seventh pin (the gate drive terminal GD) of the controlling integrated circuit 50 is switched to the High/Low by the high-frequency wave, the gate drive output is consumed by the resistance R21, and thereby the switching element Q1 is maintained in the off-state.

Additionally, in the case where the switching element Q2 is turned off, since the switching element Q1 is switched to be on/off in accordance with the switching at the high-frequency wave of the seventh pin (the gate drive terminal GD) of the controlling integrated circuit 50, the chopper operation will be in a normal state.

Hence, a ratio between the chopper operation period and the chopper operation stopping period coincides with a ratio between the Low level period and the High level period of the PWM signal. A constant current is supplied in the chopper operation period and a current supply is stopped in the chopper operation stopping period, and consequently an electric current depending on a ratio of the Low level period to one cycle of the PWM signal is supplied to the semiconductor light emitting element 4. In this manner, the dimming with high precision can be realized.

In addition, instead of the above-mentioned on-off control of the switching element Q2 or with the control, the oscillating operation of the controlling integrated circuit 50 may be controlled to be intermittently stopped by shorting the fifth pin (ZCD) of the controlling integrated circuit 50 to the ground in synchronization with the low-frequency PWM signal. As described above, in the case where the L6562 manufactured by the ST Microelectronics Corporation is employed as the controlling integrated circuit 50, the disable circuit 55 is connected to the fifth pin (ZCD) as the zero-cross detection terminal as shown in Fig. 2, and accordingly when the fifth pin is shorted to the ground, the operation of the IC can be stopped. Then, when the low-frequency PWM signal is in a High level, the fifth pin (ZCD) is shorted to the ground to stop the operation of the IC, and when the low-frequency PWM signal is in a Low level, the fifth pin (ZCD) is opened to return the operation to the normal operation. In this manner, the dimming can be carried out on the basis of the ratio between the Low level period and the High level period of the low-frequency PWM signal.

The overall configuration of the LED dimming lighting device 1 incorporating the lighting device of Fig. 17 is the same as that shown in Fig. 3. The power source circuit 2 is configured by including the above-mentioned filter circuit 2a and the rectifying smoothing circuit 2b. The capacitors Cc and Cd are capacitors used for connecting the circuit ground (the negative electrode of the capacitor C0) to the fixture chassis in the high-frequency manner. CON1 is the power source connector connected to the commercially-available alternating-current power source Vs, CON2 is the output connector connected to the semiconductor light emitting element 4 via the lead line 44, and CON3 is a connector for connecting the dimming signal line. To the dimming signal line, a dimming signal including a duty-variable rectangular wave voltage signal having 1khz-frequency and 10V-amplitude is supplied.

The rectifier circuit 5a connected to the connector CON3 is a circuit for making a wire of the dimming signal line be non-polarized, is configured to be able to normally operate even if the dimming signal line is inversely connected. That is, the inputted dimming signal is rectified in full-wave by the full-wave rectifier DB1, and thereby the rectangular wave voltage signal is obtained at both ends of the zener diode ZD via the impedance element Z1 such as a resistance. The insulation circuit 5b has the photo coupler PC1, and transfers the rectangular wave voltage signal with insulating the dimming signal line and the lighting device. The waveform shaping circuit 5c is a circuit for shaping a waveform of a signal outputted from the photo coupler PC1 of the insulating circuit 5b and outputting the signal as the PWM signals clearly distinguishable whether in a High level or in a Low level. Since the rectangular wave voltage signal transferred through a long distance via the dimming signal line has a distorted waveform, the waveform shaping circuit 5c is provided.

### (First modified example of fourth embodiment)

In the above-mentioned fourth embodiment, a variable resistance having a wiper (so-called a volume resistance) is employed as the variable resistance elements VR1 and VR2; however, one of or both of them may be replaced by a temperature-sensitive element such as a thermistor whose resistance value changes due to temperature change. In addition, the variable resistance having a wiper and the temperature-sensitive element may be used in combination.

The temperature-sensitive resistance element may detect a temperature of the semiconductor light emitting element 4, may detect an environmental temperature (an ambient temperature of the lighting device), and may detect a temperature of a circuit element such as the inductor L1 and the switching element Q1.

In the case where the light emitting diode (LED) is used as the semiconductor light emitting element 4, it is known that when a temperature of the element is raised, a luminous efficiency is deteriorated. Accordingly, when the control is carried out so that a lowered output due to the temperature rising can be cancelled and that the peak value of the current flowing to the switching element Q1 can be increased, the output can be constant.

In addition, in the case where a white light emitting diode is used as the semiconductor light emitting element 4, it is known that when the magnitude of the current flowing to the element, a color temperature changes. Accordingly, the magnitude of the current flowing to the element may be controlled by detecting the environment temperature (the ambient temperature of the lighting device) to be changed so that a luminescent color of cold color having a high color temperature can be realized when the environment temperature is high, or so that a luminescent color of warm color having a low color temperature can be realized when the environment temperature is low. In this case, the brightness is varied by changing the magnitude of the current flowing to the element. Then, the control may be carried out so that only the color temperature can be changed on the basis of the environmental temperature, keeping the effective value of the current flowing to the semiconductor light emitting element 4 constant by: omitting the output capacitor C2 and intermittently stopping the chopper operation with use of the switching element Q2.

Moreover, in the case where a temperature of the circuit element such as the inductor L1 and the switching element Q1 is detected and where the detected temperature is extraordinary raised, the control may be carried out so as to protect these circuit elements and to adjust the output to be suppressed.

As the temperature-sensitive element, a thermistor having a positive characteristic or a negative characteristic may be employed, and other semiconductor temperature-sensitive elements may be used. Regarding whether the temperature characteristic is positive or negative, the characteristics may be separately used on the basis of the above-mentioned each usage. For example, in the case where the control is carried out so that the lowered output due to the temperature rising can be cancelled by detecting the element temperature of the semiconductor light emitting element 4, the negative characteristic thermistor is connected to a portion of the variable resistance VR1 of Fig. 17 or the positive characteristic thermistor is connected to a portion of the variable resistance VR2.

### (Second modified example of fourth embodiment)

In addition, instead of the variable resistance elements VR1 and/or VR2 of Fig. 17, a semiconductor element whose resistance value varies on the basis of an ambient luminance or the output light of the semiconductor light emitting element 4 may be employed.

For example, in the case where the lighting device of the present invention is used for an outdoor sign lamp, since the ambient luminance is lowered at night, it is desired at the nighttime to save the power by lowering the photo output. In that case, if a configuration to detect the ambient luminance is realized in the manner that the variable resistance element VR1 of Fig. 17 is replaced by a photoconductive element such as the CdS, the current detection sensitivity of the current detection resistance R1 becomes high at nighttime, and accordingly the photo output is suppressed. In addition, the current detection sensitivity of the current detection resistance R1 becomes high at daytime, and accordingly the photo output is raised.

Additionally, in the case where the light emitting diode (LED) is employed as the semiconductor light emitting element 4, when the temperature of the element is raised, the photo output is lowered due to the deterioration of the luminance efficiency; however, if the configuration to detect the ambient luminance is realized in the manner that the variable resistance element VR2 of Fig. 17 is replaced by a photoconductive element such as the CdS, the output can be adjusted so as to suppress the variation of the photo output. Specifically, when the detection value of the photo output is lowered, the correction value superposed to the current detection value at the turning-on of the switching element Q1 is decreased due to the increasing of the resistance value of the photoconductive element, and accordingly the control is carried out so that the peak value of the current flowing to the switching element Q1 can be increased. Even when the light emitting diode (LED) deteriorates across the ages and when the photo output is lowered due to dirt of the illumination fixture, the output can be adjusted so that the lowering of the photo output can be cancelled in the same configuration.

### (Third modified example of fourth embodiment)

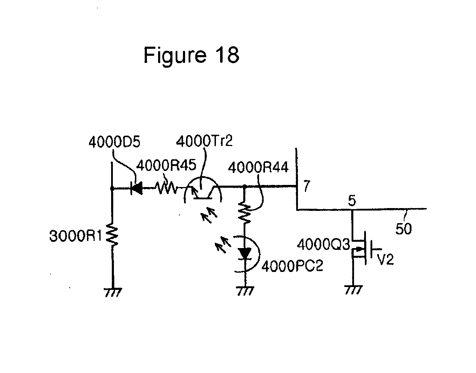

Fig. 18 is a circuit diagram showing a main part of a third modified example according to the fourth embodiment of the present invention. In the present embodiment, the photo coupler PC2 is used to evaluate the deterioration of the light emitting diode (LED) caused across the aging. The light emitting element of the photo coupler PC2 includes an LED, and the LED also deteriorates across the aging. If the electricity is also supplied to the light emitting element of the photo coupler PC2 during time when the semiconductor light emitting element 4 as the main light source is turned on, the photo output is decreased across the aging, and accordingly the resistance value of the light-receiving element of the photo coupler PC2 increases across the aging.

In the example shown in the drawing, a control signal of the seventh pin (the gate drive terminal GD) is supplied to the series circuit including the resistance R44 and the light emitting element of the photo coupler PC2. At the on-time of the switching element Q1, since a drive current flows to the light emitting element of the photo coupler PC2 via the resistance R44 due to the High level output voltage of the seventh pin, the electric conductivity of the light-receiving element of the photo coupler PC2 is lowered. Then, the direct-current electricity is superposed to the current detection resistance R1 due to the High level output voltage of the seventh pin via the light-receiving element of the photo coupler PC2, the resistance R45, and the diode D5.

In the case where the light emitting element of the photo coupler PC2 is in the begging of life, since the electric conductivity of the light-receiving element of the photo coupler PC2 is sufficiently lowered, the direct-current electricity to be superposed becomes large, and the peak value of the current flowing to the switching element Q1 can be small. Meanwhile, when the light-emitting element of the photo coupler PC2 deteriorates across the aging, since the photo output is decreased, and thereby the electric conductivity of the light-receiving element of the photo coupler PC2 becomes hard to be lowered; accordingly, the direct-current electricity to be superposed becomes small, and accordingly the peak value of the current flowing to the switching element Q1 can be large. In this manner, even when the luminance efficiency deteriorates across the aging of the semiconductor light emitting element 4, the output current can be increased so that the photo output cannot be short.

Additionally, in the third modified example of the fourth embodiment, in the period when the PWM signal outputted from the waveform shaping circuit 5c shown in Fig. 3 is in a High level, the fifth pin of the controlling integrated circuit 50 is shorted to the ground to stop the oscillating operation of the controlling integrated circuit 50. Other configurations may be the same as those of the fourth embodiment.

As described above, in the case where the L6562 manufactured by the ST Microelectronics Corporation is employed as the controlling integrated circuit 50, the disable circuit 55 is connected to the fifth pin (ZCD) serving as the zero-cross detection terminal as shown in Fig. 2, and when the fifth pin is shorted to the ground, the operation of the IC can be stopped. Then, when the low-frequency PWM signal (the gate voltage V2 of the switching element Q2 of Fig. 17) is in a High level, the switching element Q3 of Fig. 18 is turned on, the operation of the IC is stopped by shorting the fifth pin (ZCD) to the ground, and thereby the configuration not to output the gate drive signal from the gate drive terminal GD (the seventh pin) is employed.

Accordingly, in the dimming lighting, a period when a high-frequency pulse current flows to the light emitting element of the photo coupler PC2 becomes short as the dimming level is lowered, and thus deterioration of the light emitting element of the photo coupler PC2 becomes hard to be progressed. Accordingly, even if the total lighting time of the semiconductor light emitting element 4 is long, the luminance correction slowly progresses in the case where a period of the dimming lighting is long.

### (Fourth modified example of fourth embodiment)

In the above-mentioned fourth embodiment and the modified examples 1 to 3, the circuit example where the switching element Q1 of the step-down chopper circuit 3 is arranged on the lower potential side has been explained; however, as shown in Fig. 5(a), it is needless to say that the present invention can be also applied to the case where the switching element Q1 of the step-down chopper circuit 3a is arranged on a higher potential side.

In addition, the present invention can be applied to various types of switching power source circuit as shown in Fig. 5(b) to (d). Fig. 5(b) is an example of the step-up chopper circuit 3b, Fig. 5(c) is an example of the flyback converter circuit 3c, and Fig. 5(d) is an example of the step-up/step-down chopper circuit 3d. These are examples, and accordingly if the switching power source circuit is configured to use a combination of: a peak current detection operation for controlling the switching element Q1 to be turned off when the current flowing to the inductance component (the inductor L1 or the transformer T1) at the turning-on of the switching element Q1 reaches a predetermined value; and a zero-cross detection operation for controlling the switching element Q1 to be turned on when the current emitted via the regeneration diode D1 from the inductance component at the turning-off of the switching element Q1 becomes substantially zero, the present invention can be applied to the switching power source circuit.

The LED lighting devices of the fourth embodiment and the modified examples can be configured as the LED illumination fixture separately having a power source in the same manner as those of the first to third embodiments and the modified examples, and the details are redundant with the above-mentioned explanation of Fig. 6 and are accordingly omitted.

## Claims

1. A lighting device (1) of a semiconductor light emitting element (4) comprising: a switching element (Q1) connected in series to a direct-current power source (2) and controlled to be turned on and off at a high-frequency; an inductance component (L1) which is connected in series to the switching element (Q1) and to which an electric current flows from the direct-current power source (2) at on-time of the switching element (Q1); a regeneration diode (D1) for emitting energy accumulated in the inductance component (L1) at the on-time of the switching element (Q1) to the semiconductor light emitting element (4) at off-time of the switching element (Q1); current detection means (R1, 50) adapted to detect an electric current flowing to the switching element (Q1); and control means (5) adapted to turn off the switching element (Q1) when a current value detected by the current detection means (R1, 50) reaches a predetermined value and to turn on the switching element (Q1) when the emission of energy of the inductance component (L1) is completed, whereby said on-time and off-time switching provides an on-off operation of the switch element at a high frequency, wherein
the control means (5) is arranged to provide a first dimming operation for reducing a photo output of the semiconductor lighting element (4) by intermittently stopping the high frequency on-off operation of the switching element at a low frequency which is sufficiently lower than the on-off frequency of the switching element (Q1), and a second dimming operation for varying the photo output of the semiconductor light emitting element (4) by varying the predetermined value;
**characterized in that** the control means (5) is arranged to combine the first dimming operation and the second dimming operation such as to restrict the on-off frequency of the switching element in a frequency range between a predetermined maximum frequency (fmax) and minimum frequency (fmin).

2. The lighting device (1) of the semiconductor light emitting element (4) according to claim 1, wherein
a filter circuit (2a) for reducing a frequency component between the predetermined maximum frequency and minimum frequency within a noise regulation range is provided; and the direct-current power source (2) is a circuit for outputting a direct-current voltage that is obtained by converting a commercially-available alternating-current power source into a direct-current via the filter circuit (2a) and a rectifying smoothing circuit (2b).

3. The lighting device (1) of the semiconductor light emitting element (4) according to claim 1 or 2, wherein
the photo output of the semiconductor light emitting element (4) is reduced in the first dimming operation after the on-off frequency of the switching element (Q1) reaches the predetermined maximum frequency (fmax) by reducing the predetermined value in the second dimming operation.

4. The lighting device (1) of the semiconductor light emitting element (4) according to claim 1 or 2, wherein
the photo output of the semiconductor light emitting element (4) is increased in the first dimming operation after the on-off frequency of the switching element (Q1) reaches the predetermined minimum frequency (fmin) by increasing the predetermined value in the second dimming operation.

5. The lighting device (1) of the semiconductor light emitting element (4) according to claim 1 or 2, wherein
the first dimming operation is performed at the on-off frequency other than the predetermined maximum frequency (fmax) and other than the minimum frequency (fmin).

6. The lighting device (1) of the semiconductor light emitting element (4) according to claim 1 or 2, wherein the semiconductor light emitting element (4) is dimmed by intermittently forming at a low-frequency a state where a current value detected by the current detection means (R1, 50) reaches the predetermined value.

7. The lighting device (1) of the semiconductor light emitting element (4) according to claim 6, wherein
the state where the current value detected by the current detection means (R1, 50) reaches the predetermined value is intermittently formed at a low frequency by intermittently lowering the predetermined value at the low frequency.

8. The lighting device (1) of the semiconductor light emitting element (4) according to claim 6, wherein
the state where the current value detected by the current detection means (R1, 50) reaches the predetermined value is intermittently formed at a low frequency by intermittently superposing at the low frequency a current value larger than the predetermined value to the current value detected by the current detection means (R1, 50).

9. The lighting device (1) of the semiconductor light emitting element (4) according to any one of claims 5 to 8, wherein
an operation to intermittently block the operation of the current detection means (R1, 50) at the low frequency is simultaneously carried out.

10. The lighting device (1) of the semiconductor light emitting element (4) according to claim 6, wherein
a switch (Q2) is arranged to connect a control electrode of the switching element (Q1) to a negative terminal of the direct-current power source (2) in synchronization with the low-frequency.

11. The lighting device (1) of the semiconductor light emitting element (4) according to claim 1, wherein
the low-frequency is 100Hz or more and is 2kHz or less, and is switched in synchronization with an electric shutter of a video camera.

12. The lighting device (1) of the semiconductor light emitting element (4) according to claim 1, wherein
the low-frequency is set to an integral multiple of an inverse of shutter speed of the video camera.

13. An illumination fixture comprising:
the lighting device (1) of the semiconductor light emitting element according to anyone of the preceding claims; and
a semiconductor light emitting element (4, 40) to which an electric current is supplied from the lighting device (1).

## Patentansprüche

1. Beleuchtungsvorrichtung (1) für ein lichtemittier-endes Halbleiterelement (4), die aufweist: ein Schaltelement (Q1), das in Reihe mit einer Gleichspannungsquelle (2) verbunden ist und gesteuert wird, um mit einer hohen Frequenz ein- und ausgeschaltet zu werden; eine Induktivitätskomponente (L1), die in Reihe mit dem Schaltelement (Q1) verbunden ist und zu der ein elektrischer Strom von der Gleichspannungsquelle (2) während der Einschaltdauer des Schaltelementes (Q1) fließt; eine Rückgewinnungsdiode (D1) zur Abgabe von Energie, die während der Einschaltdauer des Schaltelementes (Q1) in der Induktivitätskomponente (L1) gespeichert wird, an das lichtemittierende Halbleiterelement (4) während der Ausschaltdauer des Schaltelementes (Q1); eine Stromerfassungseinrichtung (R1, 50), die eingerichtet ist, um einen elektrischen Strom, der zu dem Schaltelement (Q1) fließt, zu erfassen; und eine Steuereinrichtung (5), die eingerichtet ist, um das Schaltelement (Q1) auszuschalten, wenn ein durch die Stromerfassungseinrichtung (R1, 50) erfasster Stromwert einen vorbestimmten Wert erreicht, und um das Schaltelement (Q1) einzuschalten, wenn die Energieabgabe der Induktivitätskomponente (L1) beendet ist, wobei das Umschalten für die Einschaltdauer und die Ausschaltdauer einen Ein-Aus-Betrieb des Schaltelementes mit einer hohen Frequenz ergibt, wobei
die Steuereinrichtung (5) eingerichtet ist, um einen ersten Dimmbetrieb zur Reduktion einer Lichtausgabe des leuchtenden Halbleiterelementes (4) durch intermittierendes Anhalten des hochfrequenten Ein-Aus-Betriebs des Schaltelementes mit einer niedrigen Frequenz, die hinreichend kleiner ist als die Ein-Aus-Frequenz des Schaltelementes (Q1), und einen zweiten Dimmbetrieb zur Variation der Lichtausgabe des lichtemittierenden Halbleiterelementes (4) durch Variation des vorbestimmten Wertes bereitzustellen;
**dadurch gekennzeichnet, dass** die Steuereinrichtung (5) eingerichtet ist, um den ersten Dimmbetrieb und den zweiten Dimmbetrieb zu kombinieren, um so die Ein-Aus-Frequenz des Schaltelementes auf einen Frequenzbereich zwischen einer vorbestimmten maximalen Frequenz (fmax) und minimalen Frequenz (fmin) zu beschränken.

2. Beleuchtungsvorrichtung (1) für das lichtemittierende Halbleiterelement (4) nach Anspruch 1, wobei
eine Filterschaltung (2a) zur Reduktion einer Frequenzkomponente zwischen der vorbestimmten maximalen Frequenz und minimalen Frequenz innerhalb eines Rauschregelungsbereiches vorgesehen ist; und die Gleichspannungsquelle (2) eine Schaltung zur Ausgabe einer Gleichspannung ist, die erhalten wird, indem eine kommerziell verfügbare wechselspannungsquelle mittels der Filterschaltung (2a) und einer Gleichrichter- und Glättungsschaltung (2b) in eine Gleichspannung umgewandelt wird.

3. Beleuchtungsvorrichtung (1) für das lichtemittierende Halbleiterelement (4) nach Anspruch 1 oder 2, wobei
die Lichtausgabe des lichtemittierenden Halbleiterelementes (4) in dem ersten Dimmbetrieb reduziert wird, nachdem die Ein-Aus-Frequenz des Schaltelementes (Q1) die vorbestimmte maximale Frequenz (fmax) erreicht, indem der vorbestimmte Wert in dem zweiten Dimmbetrieb reduziert wird.

4. Beleuchtungsvorrichtung (1) für das lichtemittierende Halbleiterelement (4) nach Anspruch 1 oder 2, wobei
die Lichtausgabe des lichtemittierenden Halbleiterelementes (4) in dem ersten Dimmbetrieb erhöht wird, nachdem die Ein-Aus-Frequenz des Schaltelementes (Q1) die vorbestimmte minimale Frequenz (fmin) erreicht, indem der vorbestimmte Wert in dem zweiten Dimmbetrieb vergrößert wird.

5. Beleuchtungsvorrichtung (1) für das lichtemittierende Halbleiterelement (4) nach Anspruch 1 oder 2, wobei
der erste Dimmbetrieb mit der Ein-Aus-Frequenz durchgeführt wird, die sich von der vorbestimmten maximalen Frequenz (fmax) unterscheidet und die sich von der minimalen Frequenz (fmin) unterscheidet.

6. Beleuchtungsvorrichtung (1) für das lichtemittierende Halbleiterelement (4) nach Anspruch 1 oder 2, wobei das lichtemittierende Halbleiterelement (4) gedimmt wird, indem intermittierend mit einer niedrigen Frequenz ein Zustand geschaffen wird, indem ein durch die Stromerfassungseinrichtung (R1, 50) erfasster Stromwert den vorbestimmten Wert erreicht.

7. Beleuchtungsvorrichtung (1) für das lichtemittierende Halbleiterelement (4) nach Anspruch 6, wobei
der Zustand, in dem der durch die Stromerfassungseinrichtung (R1, 50) erfasste Stromwert den vorbestimmten Wert erreicht, mit einer niedrigen Frequenz intermittierend geschaffen wird, indem der vorbestimmte Wert mit der niedrigen Frequenz intermittierend verringert wird.

8. Beleuchtungsvorrichtung (1) für das lichtemittierende Halbleiterelement (4) nach Anspruch 6, wobei
der Zustand, in dem der durch die Stromerfassungseinrichtung (R1, 50) erfasste Stromwert den vorbestimmten Wert erreicht, intermittierend mit einer niedrigen Frequenz geschaffen wird, indem intermittierend mit der niedrigen Frequenz ein Stromwert, der größer ist als der vorbestimmte Wert, dem durch die Stromerfassungseinrichtung (R1, 50) erfassten Stromwert überlagert wird.

9. Beleuchtungsvorrichtung (1) für das lichtemittierende Halbleiterelement (4) nach einem beliebigen der Ansprüche 5 bis 8, wobei
ein Betrieb zur intermittierenden Sperrung des Betriebs der Stromerfassungseinrichtung (R1, 50) mit der niedrigen Frequenz gleichzeitig durchgeführt wird.

10. Beleuchtungsvorrichtung (1) für das lichtemittierende Halbleiterelement (4) nach Anspruch 6, wobei
ein Schalter (Q2) eingerichtet ist, um eine Steuerelektrode des Schaltelementes (Q1) mit einem negativen Anschluss der Gleichspannungsquelle (2) synchron mit der niedrigen Frequenz zu verbinden.

11. Beleuchtungsvorrichtung (1) für das lichtemittierende Halbleiterelement (4) nach Anspruch 1, wobei
die niedrige Frequenz 100 Hz oder mehr beträgt und 2 kHz oder weniger beträgt und synchron mit einem elektrischen Verschluss einer Videokamera geschaltet wird.

12. Beleuchtungsvorrichtung (1) für das lichtemittierende Halbleiterelement (4) nach Anspruch 1, wobei
die niedrige Frequenz gleich einem ganzzahligen Vielfachen einer inversen Verschlussgeschwindigkeit der Videokamera festgelegt ist.

13. Leuchtenvorrichtung, die aufweist:
die Beleuchtungsvorrichtung (1) für das lichtemittierende Halbleiterelement nach einem beliebigen der vorhergehenden Ansprüche; und
ein lichtemittierendes Halbleiterelement (4, 40), dem ein elektrischer Strom von der Beleuchtungsvorrichtung (1) zugeführt wird.

## Revendications

1. Dispositif d'éclairage, (1) d'un élément luminescent (4) à semi-conducteur, comportant : un élément de commutation (Q1) en série avec une source de courant continu (2) et commandé pour être rendu passant et bloquant à une haute fréquence ; un composant inductif (L1) en série avec l'élément de commutation (Q1) et vers lequel un courant électrique circule depuis la source de courant continu (2) à l'instant du déblocage de l'élément de commutation (Q1) ; une diode de récupération (D1) pour émettre de l'énergie, accumulée dans le composant inductif (L1) à l'instant du déblocage de l'élément de commutation (Q1), vers l'élément luminescent (4) à semi-conducteur à l'instant du blocage de l'élément de commutation (Q1) ; un moyen de détection (R1, 50) de courant apte à détecter un courant électrique circulant vers l'élément de commutation (Q1) ; et un moyen de commande (5) apte à rendre bloquant l'élément de commutation (Q1) quand un courant détecté par le moyen de détection (R1, 50) de courant atteint une intensité prédéterminée et à rendre passant l'élément de commutation (Q1) quand l'émission d'énergie du composant inductif (L1) est terminée, grâce à quoi la commutation de l'instant du déblocage et de l'instant du blocage crée une opération de déblocage-blocage à haute fréquence de l'élément de commutation,
le moyen de commande (5) étant conçu pour réaliser une première opération de gradation afin de réduire une production de lumière de l'élément d'éclairage (4) à semi-conducteur en arrêtant par intermittence l'opération de déblocage-blocage à haute fréquence de l'élément de commutation à une basse fréquence suffisamment plus basse que la fréquence de déblocage-blocage de l'élément de commutation (Q1), et une seconde opération de gradation pour modifier la production de lumière de l'élément luminescent (4) à semi-conducteur en modifiant l'intensité prédéterminée ;
**caractérisé en ce que** le moyen de commande (5) est conçu pour combiner la première opération de gradation et la seconde opération de gradation afin de limiter la fréquence de déblocage-blocage de l'élément de commutation à un intervalle de fréquences entre une fréquence maximale (fmax) et une fréquence minimale (fmin) prédéterminées.

2. Dispositif d'éclairage (1) de l'élément luminescent (4) à semi-conducteur selon la revendication 1, dans lequel
un circuit de filtrage (2a) pour réduire une composante de fréquence entre les fréquence maximale et fréquence minimale prédéterminées dans un intervalle de régulation de bruit est prévu ; et la source de courant continu (2) est un circuit pour délivrer une tension continue obtenue en convertissant une source de courant alternatif du commerce en source de courant continu à l'aide du circuit de filtrage (2a) et d'un circuit redresseur de lissage (2b).

3. Dispositif d'éclairage (1) de l'élément luminescent (4) à semi-conducteur selon la revendication 1 ou 2, dans lequel
la production de lumière de l'élément luminescent (4) à semi-conducteur est réduite lors de la première opération de gradation après que la fréquence de déblocage-blocage de l'élément de commutation (Q1) a atteint la fréquence maximale prédéterminée (fmax) en réduisant l'intensité prédéterminée lors de la seconde opération de gradation.

4. Dispositif d'éclairage (1) de l'élément luminescent (4) à semi-conducteur selon la revendication 1 ou 2, dans lequel
la production de lumière de l'élément luminescent (4) à semi-conducteur est accrue lors de la première opération de gradation après que la fréquence de déblocage-blocage de l'élément de commutation (Q1) a atteint la fréquence minimale prédéterminée (fmin) en accroissant l'intensité prédéterminée lors de la seconde opération de gradation.

5. Dispositif d'éclairage (1) de l'élément luminescent (4) à semi-conducteur selon la revendication 1 ou 2, dans lequel
la première opération de gradation est réalisée à une fréquence de déblocage-blocage autre que la fréquence maximale prédéterminée (fmax) et autre que la fréquence minimale prédéterminée (fmin).

6. Dispositif d'éclairage (1) de l'élément luminescent (4) à semi-conducteur selon la revendication 1 ou 2, dans lequel l'élément luminescent (4) à semi-conducteur est soumis à une gradation en créant par intermittence, à une basse fréquence, un état où un courant détecté par le moyen de détection (R1, 50) de courant atteint l'intensité prédéterminée.

7. Dispositif d'éclairage (1) de l'élément luminescent (4) à semi-conducteur selon la revendication 6, dans lequel
l'état où le courant détecté par le moyen de détection (R1, 50) de courant atteint l'intensité prédéterminée est créé par intermittence à une basse fréquence en abaissant par intermittence l'intensité à la basse fréquence.

8. Dispositif d'éclairage (1) de l'élément luminescent (4) à semi-conducteur selon la revendication 6, dans lequel
l'état où le courant détecté par le moyen de détection (R1, 50) de courant atteint l'intensité prédéterminée est créé par intermittence à une basse fréquence en superposant par intermittence, à la basse fréquence, un courant à intensité plus forte que l'intensité prédéterminée au courant détecté par le moyen de détection (R1, 50) de courant.

9. Dispositif d'éclairage (1) de l'élément luminescent (4) à semi-conducteur selon l'une quelconque des revendications 5 à 8, dans lequel
une opération servant à bloquer par intermittence le fonctionnement du moyen de détection (R1, 50) de courant à la basse fréquence est réalisée simultanément.

10. Dispositif d'éclairage (1) de l'élément luminescent (4) à semi-conducteur selon la revendication 6, dans lequel
un commutateur (Q2) est conçu pour connecter une électrode de commande de l'élément de commutation (Q1) à une borne négative de la source de courant continu (2) en synchronisme avec la basse fréquence.

11. Dispositif d'éclairage (1) de l'élément luminescent (4) à semi-conducteur selon la revendication 1, dans lequel
la basse fréquence est de 100 Hz ou plus et est de 2 kHz ou moins et est commutée en synchronisme avec un obturateur électrique d'une caméra vidéo.

12. Dispositif d'éclairage (1) de l'élément luminescent (4) à semi-conducteur selon la revendication 1, dans lequel
la basse fréquence est établie à un multiple entier d'un inverse de la vitesse de l'obturateur de la caméra vidéo.

13. Luminaire, comportant :
le dispositif d'éclairage (1) de l'élément luminescent à semi-conducteur selon l'une quelconque des revendications précédentes ; et
un élément luminescent (4, 40) à semi-conducteur auquel un courant électrique est fourni par le dispositif d'éclairage (1).
